(19) Europäisches Patentamt / European Patent Office / Office européen des brevets

(11) **EP 1 614 109 B1**

(12) **EUROPEAN PATENT SPECIFICATION**

(45) Date of publication and mention
of the grant of the patent:
**02.05.2007  Bulletin 2007/18**

(21) Application number: **04723682.3**

(22) Date of filing: **26.03.2004**

(51) Int Cl.:
*G11B 19/12* *(2006.01)*

(86) International application number:
**PCT/IB2004/050336**

(87) International publication number:
**WO 2004/088656 (14.10.2004 Gazette 2004/42)**

(54) **DISC DRIVE APPARATUS, AND METHOD FOR RECOGNIZING CD AND DVD**

PLATTENLAUFWERKVORRICHTUNG UND VERFAHREN ZUM ERKENNEN VON CD UND DVD

APPAREIL LECTEUR DE DISQUE, ET PROCEDE POUR RECONNAITRE UN CD ET UN DVD

(84) Designated Contracting States:
**AT BE BG CH CY CZ DE DK EE ES FI FR GB GR
HU IE IT LI LU MC NL PL PT RO SE SI SK TR**

(30) Priority: **02.04.2003  WOPCT/SG03/00087**

(43) Date of publication of application:
**11.01.2006  Bulletin 2006/02**

(73) Proprietor: **Koninklijke Philips Electronics N.V.
5621 BA  Eindhoven (NL)**

(72) Inventors:
• **YAK, Aik, S.
NL-5656 AA Eindhoven (NL)**

• **LI, Wenhua
NL-5656 AA Eindhoven (NL)**

(74) Representative: **Uittenbogaard, Frank
Philips
Intellectual Property & Standards
P.O. Box 220
5600 AE  Eindhoven (NL)**

(56) References cited:
**EP-A- 1 139 342**

• **PATENT ABSTRACTS OF JAPAN vol. 2002, no.
03, 3 April 2002 (2002-04-03) & JP 2001 312827 A
(MINOLTA CO LTD), 9 November 2001
(2001-11-09)**

**Description**

The present invention relates in general to a disc drive apparatus for writing/reading information into/from an optical storage disc; hereinafter, such disc drive apparatus will also be indicated as "optical disc drive". The present invention relates further to a method for identifying the type of a disc inserted in the disc drive apparatus.

As is commonly known, optical discs have been developed according to different formats. By way of example, CD and DVD are mentioned here, but the gist of the present invention is also applicable to other disc types. Conventionally, disc drives have been developed as dedicated devices, i.e. suitable for one disc type only. Thus, for instance, optical disc drives of CD type have been developed on the one hand, and optical disc drives of DVD type have been developed on the other hand. Such dedicated disc drives are suitable for one type of optical disc only; if the wrong type of disc is inserted in such drive, the disc drive can not handle the disc and responds with an error message. In other words, such dedicated disc drives know what type of disc to expect, "wrong types" are handled according to the format of the expected disc type.

More recently, disc drives have been developed which are capable of handling two (or more) different types of disc. Such type of disc drive will be indicated as multiple-type drive. As a specific example, a multiple-type drive for handling CDs and DVDs will be described in the following, but it is to be noted that such description is not intended to restrict the protective scope of the present invention to this example since the gist of the present invention is also applicable to other types of disc.

Since a multiple-type drive may expect a disc to be any of two (or more) different types of disc, it needs to ascertain the type of disc when a new disc is inserted, in order to be able to handle the disc with the correct format.

Thus, in a multiple-type drive, there is a need for a method and apparatus for determining disc type.

An important characteristic distinguishing CDs and DVDs from each other is the thickness of the disc. A CD has a thickness of 1.2 mm whereas a DVD has a thickness of 0.6 mm. Thus, a method to recognize a CD and a DVD, or at least to distinguish between CD and DVD, has been developed on the basis of measuring the thickness of the disc: if the thickness appears to be approximately 0.6 mm (or less than a reference value, e.g. 0.9 mm) it is concluded that the disc is a DVD, whereas, if the thickness appears to be approximately 1.2 mm (or more than a reference value, e.g. 0.9 mm) it is concluded that the disc is a CD.

US-6.061.318 discloses a method for discriminating disc type on the basis of the thickness of the disc. The focal actuator is controlled with a ramping voltage to axially displace the objective lens such that the focal point of the laser beam is axially displaced towards the disc, and the focal error signal is monitored. A characteristic of the focal error signal indicates when the focal point reaches the surface of the disc at a first moment in time, and when the focal point reaches an information layer at a second moment in time. The thickness of the disc may be calculated from the time distance between the first and the second moment in time, taking the displacement speed of the optical lens into account, which depends on the slope of the actuator driving voltage.

A problem with this prior art method is that the displacement speed of the optical lens is not accurately known, because the actuator sensitivity, i.e. displacement as a function of control voltage (mm/V), is not an accurately known constant. Typically, this sensitivity ranges from 0.65 mm/V to 1.3 mm/V. Even for one specific actuator, this sensitivity may vary with age of the actuator, and condition (e.g. temperature) of the actuator.

A main objective of the present invention is to overcome this problem.

EP-1.139.342 also discloses a method for discriminating disc type on the basis of the thickness of the disc, in a disc drive apparatus wherein the laser beam has two focal points axially displaced with respect to each other over a known distance. The focal actuator is controlled with a ramping voltage to axially displace the objective lens; the actual speed of the objective lens is determined from the time difference between two signal peaks originating from said two focal points. However, this method can only be executed if the laser beam has two focal points.

Specifically, the present invention aims to provide a more reliable disc recognition method, which is capable of being executed in a disc drive apparatus wherein the laser beam has only one focal point.

More specifically, the present invention aims to provide a disc recognition method where the dependency of the outcome on actuator sensitivity is eliminated or at least reduced.

According to an important aspect of the present invention, a method for calibrating the focal actuator is provided, wherein the time difference between the occurrence of a first characteristic feature of the focal error signal and the occurrence of a second characteristic feature of the focal error signal is taken into account. Preferably, said first characteristic feature and second characteristic feature are the maximum value and the minimum value, respectively, of the focal error signal, based on the insight that these two extremities have a fixed distance determined by the design of the optical system.

In a first special aspect, a method for measuring the speed of the focal actuator is provided.

In a second special aspect, a method for measuring the sensitivity of the focal actuator is provided.

In a third special aspect, a method for measuring the thickness of an optical disc is provided.

These and other aspects, features and advantages of the present invention will be further explained by the following description with reference to the drawings, in which same reference numerals indicate same or similar parts, and in which:

Fig. 1 schematically illustrates some relevant components of an optical disc drive apparatus;
Fig. 2 schematically illustrates an optical detector;
Fig. 3 schematically illustrates astigmatism;
Fig. 4A schematically illustrates an S-shaped curve;
Fig. 4B-D schematically illustrate the shape of a light spot on an optical detector;
Fig. 5 schematically illustrates optical signals as a function of time.

Figure I schematically illustrates an optical disc drive apparatus 1, suitable for storing information on or reading information from an optical storage disc 2, typically a DVD or a CD. The optical disc 2 comprises at least one track, either in the form of a continuous spiral or in the form of multiple concentric circles, of storage space where information may be stored in the form of a data pattern. The optical disc may be read-only type, where information is recorded during manufacturing, which information can only be read by a user. The optical disc may also be a writable type, where information may be stored by a user. Since the technology of optical discs in general, the way in which information can be stored in an optical disc, and the way in which optical data can be read from an optical disc, is commonly known, it is not necessary here to describe this technology in more detail.

For rotating the disc 2, the disc drive apparatus I comprises a motor 4 fixed to a frame (not shown for sake of simplicity), defining a rotation axis 5. For receiving and holding the disc 2, the disc drive apparatus 1 may comprise a turntable or clamping hub 6, which in the case of a spindle motor 4 is mounted on the spindle axle 7 of the motor 4.

The disc drive apparatus 1 further comprises an optical system 30 for scanning tracks of the disc 2 with an optical beam. More specifically, in the exemplary arrangement illustrated in figure I, the disc drive apparatus 1 is a multiple-type drive designed for handling two types of disc, i.e. CD as well as DVD for example. The optical system 30 comprises a first light beam generating means 31 and a second light beam generating means 41, each typically a laser such as a laser diode, each arranged to generate a first light beam 32 and a second light beam 42, respectively. In the following, different sections of the optical path of a light beam 32, 42 will be indicated by a character a, b, c, etc added to the reference numeral 32, 42, respectively. It is noted that, in a disc drive apparatus designed for handling only one type of disc, i.e. only CD for example, typically only one laser diode will be present.

The first light beam 32 passes a first beam splitter 43, a second beam splitter 33, a collimator lens 37 and an objective lens 34 to reach (beam 32b) the disc 2. The first light beam 32b reflects from the disc 2 (reflected first light beam 32c) and passes the objective lens 34, the collimator lens 37 and the second beam splitter 33 (beam 32d) to reach an optical detector 35.

The second light beam 42 is reflected by a mirror 44, passes the first beam splitter 43, and then follows an optical path comparable with the optical path of the first light beam 32, indicated by reference numerals 42b, 42c, 42d. The objective lens 34 is designed to focus one of the two light beams 32b, 42b in a focal spot F on an information layer (not shown for sake of simplicity) of the disc 2, which spot F normally is circular. For explaining the present invention, it will be assumed in the following that only the first laser 31 is operated and that the second laser 41 is OFF.

During operation, the light beam should remain focussed on the recording layer. To this end, the objective lens 34 is arranged axially displaceable, and the optical disc drive apparatus 1 comprises a focal actuator 52 arranged for axially displacing the objective lens 34 with respect to the disc 2. Since axial actuators are known per se, while further the design and operation of such axial actuator is no subject of the present invention, it is not necessary here to discuss the design and operation of such focal actuator in great detail.

It is noted that means for supporting the objective lens with respect to an apparatus frame, and means for axially displacing the objective lens, are generally known per se. Since the design and operation of such supporting and displacing means are no subject of the present invention, it is not necessary here to discuss their design and operation in great detail.

The disc drive apparatus 1 further comprises a control circuit 90 having an output 94 coupled to a control input of the focal actuator 52, and a read signal input 91 for receiving a read signal $S_R$ from the optical detector 35. The control circuit 90 is designed to generate at its output 94 a control signal $S_{CF}$ for controlling the focal actuator 52.

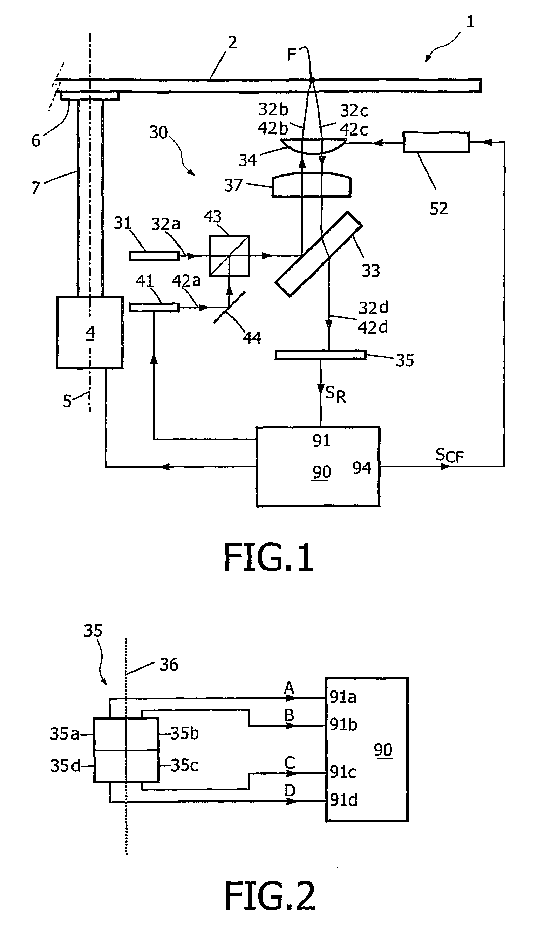

Figure 2 illustrates that the optical detector 35 comprises a plurality of detector segments, in this case four detector segments 35a, 35b, 35c, 35d, capable of providing individual detector signals A, B, C, D, respectively, indicating the amount of light incident on each of the four detector quadrants, respectively. A centre line 36, separating the first and fourth segments 35a and 35d from the second and third segments 35b and 35c, has a direction corresponding to the track direction. Since such four-quadrant detector is commonly known per se, it is not necessary here to give a more detailed description of its design and functioning.

Figure 2 also illustrates that the read signal input 91 of the control circuit 90 actually comprises four inputs 91a, 91b, 91c, 91d for receiving said individual detector signals A, B, C, D, respectively. The control circuit 90 is designed to process said individual detector signals A, B, C, D, in order to derive data and control information therefrom, as will be clear to a person skilled in the art. For instance, a data signal $S_D$ can be obtained by summation of all individual detector signals A, B, C, D according to

$$S_D = A + B + C + D \qquad\qquad (1)$$

Further, a focal error signal $S_{FE}$ can be obtained by summation of the signals A and C from one pair of individual detector segments 35a and 35c diagonally opposite to each other, summation of the signals B and D from the other pair of individual detector segments 35b and 35d diagonally opposite to each other, and taking the difference of these two summations, according to

$$S_{FE} = (A + C) - (B + D) \qquad\qquad (2a)$$

In order to compensate light intensity variations of the beam as a whole, this error signal can be normalized by division by the data signal to obtain a normalized focal error signal FES according to

$$FES = S_{FE} / S_D \qquad\qquad (2b)$$

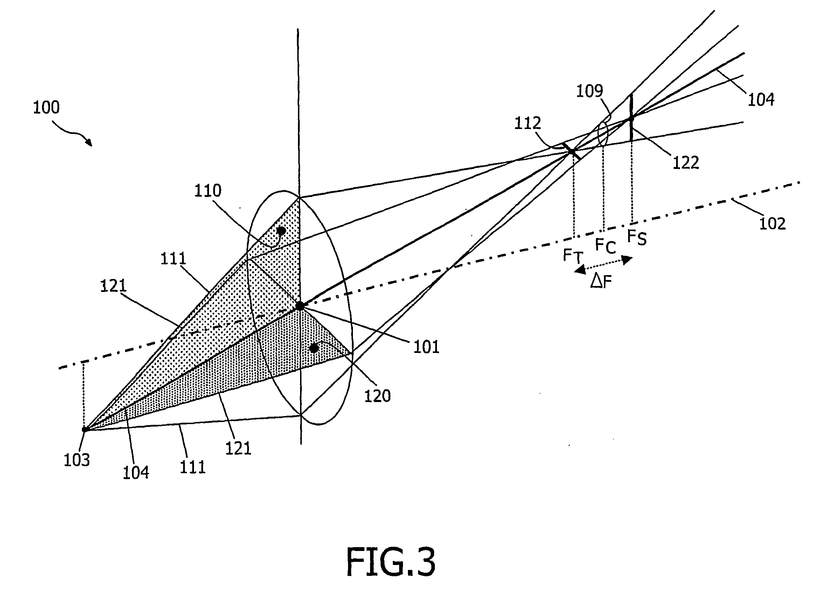

The light beam 32d is subject to astigmatism. This may for instance be caused by the second beam splitter 33, which, in the example depicted in figure 1, is implemented as a tilted beam splitter plate. Alternatively, or additionally, it is also possible that the optical path includes an additional optical element, not shown in figure 1 for sake of clarity, located in front of the detector 35, for deliberately introducing astigmatism, as will be clear to a person skilled in the art. Astigmatism means that, instead of having one focal point where all light rays meet, a converging light beam has two elongate focal spots, axially displaced with respect to each other, and oriented perpendicular to each other, as illustrated in figure 3. Figure 3 shows an optical system generally indicated at 100 having an optical centre 101 and an optical axis 102. An object point is indicated at 103, located at a distance from the optical axis. A principal ray 104 emerging from the object point 103 passes the optical centre 101 without refraction.

A first main plane 110, indicated as tangential plane, is defined by the optical axis 102 and the object point 103. Rays emerging from the object point 103 and located in this plane are indicated as tangential rays 111. These tangential rays 111 are refracted by the optical system 100 such as to be focused in a tangential focal spot 112.

A second main plane 120, indicated as sagittal plane, is defined by the principal ray 104 and extends perpendicular to the tangential plane. Rays emerging from the object point 103 and located in this plane are indicated as sagittal rays 121. These sagittal rays 121 are refracted by the optical system 100 such as to be focused in a sagittal focal spot 122.

Astigmatism means that the sagittal focal spot 122 does not coincide with the tangential focal spot 112. In the example of figure 3, the axial distance from the sagittal focal spot 122 to the optical centre 101 is larger than the axial distance from the tangential focal spot 112 to the optical centre 101. It can be shown that the axial distance between the sagittal focal spot 122 and the tangential focal spot 112 depends substantially only on optical parameters of the optical system, such as, in the case of an optical system 30 of a disc drive, the focal length of the objective lens, the focal length of the collimator lens, the refractive index of the beam splitter 33, the thickness of the beam splitter 33, the incident angle between reflected beam 32c and the beam splitter 33.

The sagittal focal spot 122, hereinafter also indicated as $F_S$, is not a point in space. It can clearly be seen from figure 3 that, in the sagittal focal spot $F_S$, all sagittal rays 121 are focussed but all tangential rays 111 are beyond their focal point and are diverging again, such that the sagittal focal spot $F_S$ has an elongate shape. In an ideal case, the sagittal focal spot $F_S$ has the shape of a line segment located in the tangential plane 110 and perpendicular to the optical axis 102.

Likewise, the tangential focal spot 112, hereinafter also indicated as $F_T$, is not a point in space. It can clearly be seen from figure 3 that, in the tangential focal spot $F_T$, all tangential rays 111 are focussed but all sagittal rays 121 have not yet reached their focal point and are still converging, such that the tangential focal spot $F_T$ has an elongate shape. In an ideal case, the tangential focal spot $F_T$ has the shape of a line segment located in the sagittal plane 120 and perpendicular to the optical axis 102.

Thus, the elongate tangential focal spot $F_T$ and the elongate sagittal focal spot $F_S$ are perpendicular to each other, having a fixed axial distance which will be indicated hereinafter as astigmatic focal distance $\Delta F$. Approximately halfway between the tangential focal spot $F_T$ and the sagittal focal spot Fs, the light beam has a substantially circular cross-section in a so-called "circle of least confusion" 109, hereinafter also indicated as circular focal point $F_C$.

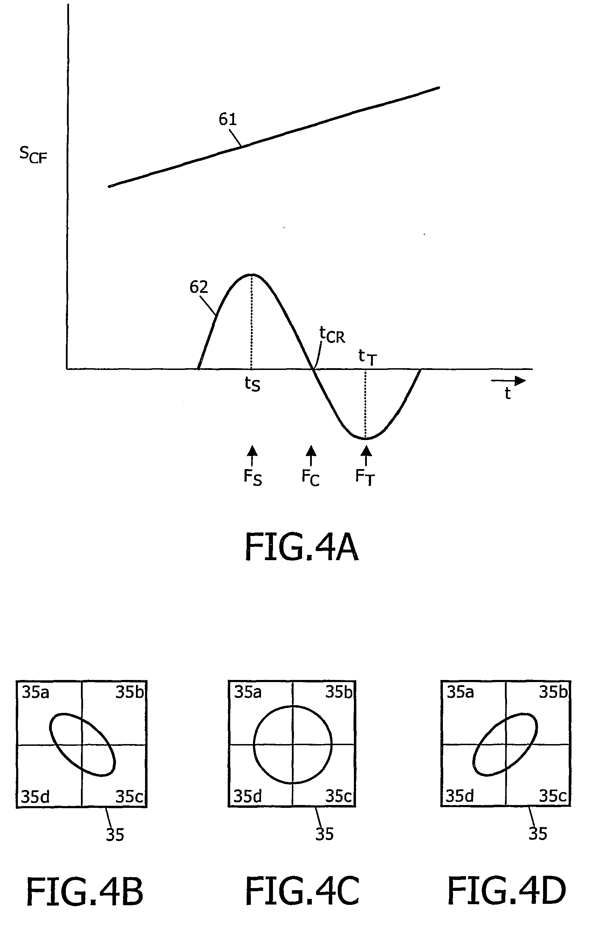

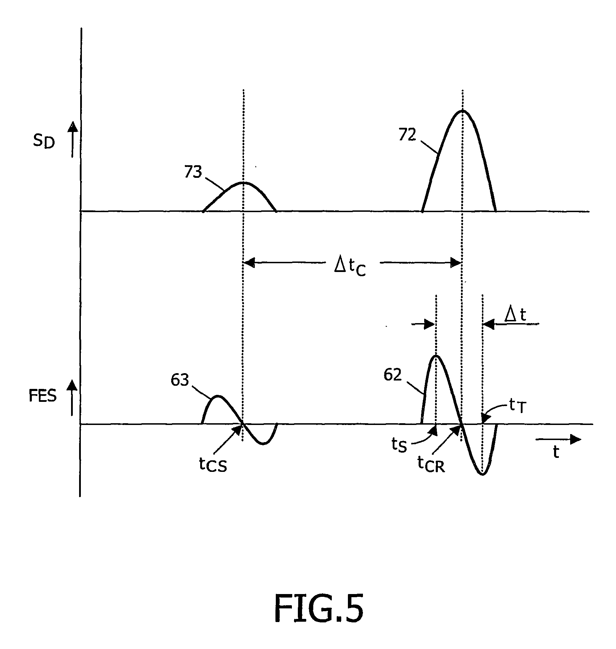

Figures 4A-D and 5 illustrate the optical signals obtained when the focus actuator 52 displaces the objective lens 34. In figure 4A, the line 61 indicates a control voltage $S_{CF}$ applied by the control circuit 90 to the focus actuator 52, and the curve 62 indicates the normalized focal error signal FES, as a function of time. As the control voltage increases, the objective lens 34 is moved towards the disc 2. Initially, the focus points $F_S$ and $F_T$ are well below the information layer of the disc, and the detector 35 receives only little reflected light, while further the cross-sectional shape of the optical spot on the detector 35 is more or less circular. When the sagittal focus point $F_S$ approaches the information layer, FES increases, and reaches a maximum at time $t_S$ when the sagittal focus point $F_S$ coincides with the information layer; figure 4B illustrates the shape of the optical spot on the detector 35 for this situation.

With a further increase of the control voltage $S_{CF}$, the shape of the optical spot on the detector 35 becomes more and more circular, until at time $t_{CR}$ the circular focal point $F_C$ coincides with the information layer; figure 4C illustrates the circular shape of the optical spot on the detector 35 for this situation. At this moment, FES equals zero. This condition is considered to be the optimum focus condition for reading or writing optical information from/to disc, and, normally, a focus servo system is adapted to control the focus actuator to maintain the objective lens in this condition.

With a still further increase of the control voltage $S_{CF}$, the absolute value of FES increases again, but now FES has opposite sign because the optical spot on the detector 35 becomes elongate in another direction. At time $t_T$, FES reaches a maximum negative value, or minimum, when the tangential focus point $F_T$ coincides with the information layer; figure 4D illustrates the shape of the optical spot on the detector 35 for this situation.

With a further increase of the control voltage $S_{CF}$, the absolute value of FES decreases again.

In view of its shape, curve 62 is also indicated as "S-shaped curve".

Figure 5 is a graph similar to figure 4A but on a larger time scale. This figure 5 shows that, at lower values of the control voltage $S_{CF}$, a second S-shaped curve 63 is observed, now caused by reflection of the light beam 32b by the lower surface of the disc. The time when the circular focal point $F_C$ coincides with this lower disc surface, i.e. when the focal error signal FES crosses zero, is indicated as $t_{CS}$. Usually, the second S-shaped curve 63 corresponding with the lower disc surface has a smaller amplitude than the first S-shaped curve 62 corresponding with the information layer, as shown in figure 5.

Figure 5 also shows the low frequency part of the data signal $S_D$ (also known as central aperture signal CA) for the beam reflected from the lower disc surface and the beam reflected from the information layer, respectively, as curves 73 and 72, respectively. Usually, the second $S_D$-curve 73 corresponding with the lower disc surface has a smaller amplitude than the first $S_D$-curve 72 corresponding with the information layer, as shown in figure 5. As can be seen from figure 5, the $S_D$-curves 73 and 72 have maximum values at times $t_{CS}$ and $t_{CR}$, respectively.

Since the astigmatic focal distance $\Delta F$ is an apparatus constant, the speed V of the optical lens 34 can be calculated from the time interval $\Delta t = t_T - t_S$, according to formula (3):

$$V = \Delta F / \Delta t \qquad\qquad\qquad (3)$$

assuming, of course, that the speed V of the optical lens 34 is constant during said time interval.

With reference to figure 5, the thickness D of the disc 2, or more precisely the distance between lower disc surface and information layer, can be calculated from the speed V of the optical lens 34 and the time interval $\Delta t_C = t_{CR} - t_{CS}$, according to formula (4):

$$D = V * \Delta t_C \qquad\qquad\qquad (4)$$

under the assumption that the speed V of the optical lens 34 remains constant during this time interval, or at least that the average speed measured during the time interval $\Delta t = t_T - t_S$ is a sufficiently accurate approximation of the average speed occurring during the time interval from $t_{CS}$ to $t_{CR}$.

In a first embodiment, the control circuit 90 may calculate the duration of the time interval $\Delta t_C$, i.e. determine the times $t_{CS}$ and $t_{CR}$, on the basis of the focal error signal FES, i.e. by determining when the zero-crossings of the focal error signal FES occur.

In a second embodiment, the control circuit 90 may calculate the duration of the time interval $\Delta t_C$, i.e. determine the times $t_{CS}$ and $t_{CR}$, on the basis of the low frequency part of the data signal $S_D$, i.e. by determining when the peaks of the low frequency part of the data signal $S_D$ occur. In this respect it is noted that determining zero-crossings may be more accurate than determining the timing of a peak, but on the other hand the second S-shaped curve 63 corresponding to the lower disc surface is very small, so that using the low frequency part of the data signal $S_D$ is more convenient.

The control circuit 90 is now capable of deciding whether the disc 2 is a CD or a DVD and handling the disc in accordance with the correct format. For instance, by comparing the calculated thickness D with a suitable reference value $D_{REF}$, for instance $D_{REF}$ = 0.9 mm, the control circuit 90 may decide that the disc 2 is a CD if $D > D_{REF}$ and that the disc 2 is a DVD if $D < D_{REF}$.

Thus, the present invention provides an improved method for measuring the thickness of an optical disc and determining whether the disc is a CD or a DVD. The optical lens 34 is caused to move towards the disc 2 with a substantially constant speed, with the optical beam 32 switched on, and the focal error signal is analyzed. By timing the S-shaped curve, the actual value of this speed V is determined. By timing different reflections from the disc, taking into account the measured speed V, the thickness of the disc is determined. An important advantage is that the outcome of the thickness measurement is substantially independent from the actual value of said speed V, and thus independent from the actual sensitivity of the actuator.

Although the present invention is intended to provide a method for a relative accurate determination of the thickness of an optical disc, and to provide a method for a reliable determination whether the disc is a CD or a DVD, an embodiment of the present invention also provides a method for measuring the speed V of the optical lens 34 (see formula 3).

Further, an embodiment of the present invention also provides a method for measuring the sensitivity $\gamma$ of the actuator 52, which is defined according to formula 5:

$$V = \gamma * d(S_{CF})/dt \qquad (5)$$

$S_{CF}$ being the (voltage of the) control signal from the control circuit 90 to the actuator 52. After having calculated speed V in accordance with formula 1, the control circuit 90, knowing the time-derivative of its control signal, can calculate the sensitivity $\gamma$ by dividing speed V by said time-derivative according to formula 6:

$$\gamma = V / (d(S_{CF})/dt) \qquad (6)$$

On the other hand, if it is only desired to determine the type of disc, it is not necessary to actually calculate the speed V of the optical lens 34. By combining formulas 3 and 4, it is sufficient to calculate the actual value of a disc type parameter $\alpha$, defined in accordance with formula 7:

$$\alpha = \Delta t_C / \Delta t \qquad (7)$$

It is possible to determine in advance the expected value of such disc type parameter $\alpha$ for a CD and for a DVD. For example, if for a certain optical system the astigmatic focal distance $\Delta F$ is equal to 10 $\mu$m, then $\alpha_{CD}$ =120 and $\alpha_{DVD}$ = 60. Thus, it is possible to define in advance a reference value $\alpha_{REF}$ for the disc type parameter $\alpha$, for instance $\alpha_{REF}$ = 90. Thus, the control circuit 90 may compare the actual value of the disc type parameter $\alpha$ with this reference value $\alpha_{REF}$, and may decide that the disc 2 is a CD if $\alpha > \alpha_{REF}$ and that the disc 2 is a DVD if $\alpha < \alpha_{REF}$.

It should be clear to a person skilled in the art that the present invention is not limited to the exemplary embodiments discussed above, but that various variations and modifications are possible within the protective scope of the invention as defined in the appending claims.

For instance, it is to be noted that the present invention is not limited to a multiple-type drive. The present invention can also be applied in a dedicated disc drive, intended for one type of disc only, to determine whether a wrong type of disc has been inserted.

Further, the present invention can likewise be used to differentiate for instance Blu-Ray discs from for instance DVD discs and CD discs.

Further, the present invention can likewise be exercised by moving the optical lens away from the disc, starting at a starting point close to the disc. Normally, however, when a new disc is inserted, or when the disc drive apparatus is switched on or initialized, the optical lens will initially be in a parking position at a relatively large distance from the disc. Nonetheless, after having measured the thickness of the disc with the method as explained above, a similar measurement can be repeated with the lens moving in the opposite direction.

In the above, a measurement for determining the speed V of the optical lens has been explained by measuring the time interval between the occurrence of two characteristic events, i.e. the maximum value and the minimum value, associated with the sagittal focal point and the tangential focal point, of one S-shaped curve only. However, as explained with reference to figure 5, two S-shaped curves are observed when measuring the thickness of the disc. In fact, in association with each reflective layer of the disc, respective S-shaped curves are to be expected. The speed measurement can be performed in conjunction with each of said S-shaped curves. Thus, in the example described, the speed V can be calculated for the S-curve 63 associated with the lower surface of the disc, and the speed V can also be calculated for the S-curve 62 associated with the information layer of the disc. Thus, two measuring results are obtained. It is possible that these two measuring results are compared, and that the measurements are considered as being correct only if they correspond within a certain predetermined tolerance. However, it is also possible that the average speed of the objective lens is calculated as being the mathematical average of the two measuring results, and that this average speed is used in formula 4.

In the above, the present invention has been explained by taking into account two reflections from two reflective layers, i.e. the disc surface on the one hand and an information layer on the other hand. However, it is also possible that a disc has multiple information layers. In such case, the method proposed by the present invention can likewise be exercised by taking into account the respective reflections from such information layers for determining the number and/or locations and/or mutual distances of such multiple information layers, and eventually determining the type of disc from the outcome of such determination.

In the above, the present invention has been explained by taking into account the time interval $\Delta t_C = t_{CR} - t_{CS}$ between zero-crossings of the focal error signal. However, instead of using the zero-crossings of the focal error signal, it is also possible to use other characteristic events of the focal error signal, such as the extreme values (i.e. ts, $t_T$).

In the above, the present invention has been explained by discussing a processing of the normalized focal error signal FES. Although it is preferred to use the normalized focal error signal FES, indeed, such is, however, not essential, and the present invention can also be exercised by using the non-normalized focal error signal $S_{FE}$ according to formula 2b, because the timing of the characteristic events of this signal (i.e. maximum, minimum, zero-crossing) is not influenced by normalization.

In the above, with reference to figure 3, astigmatism has been explained by assuming that the focal distance of the sagittal focus point $F_S$ is larger than the focal distance of the tangential focus point $F_T$. However, the same explanation applies, mutatis mutandis, if the focal distance of the sagittal focus point $F_S$ is smaller than the focal distance of the tangential focus point $F_T$.

**Claims**

1. Method for determining axial speed (V) of an optical lens (34) of an optical disc drive (1), wherein:

   a light beam (32) is generated, directed towards the optical disc (2), and caused to reflect from the optical disc (2), wherein the light beam passes said optical lens (34);
   the reflected light beam (32d) is received by an optical detector (35), wherein said light beam has astigmatism, i.e. a tangential focal spot (112) and a sagittal focal spot (122) at mutually different axial positions;
   an output signal ($S_R$) from said optical detector (35) is processed to derive therefrom a focal error signal (FES);
   said optical lens (34) is caused to move axially with respect to said optical disc (2);
   an S-shaped curve (62) of the focal error signal (FES) is timed;
   and the axial speed (V) of the optical lens (34) is calculated on the basis of the timing result of the S-shaped curve (62).

2. Method according to claim 1, wherein the axial speed (V) of the optical lens (34) is calculated according to the formula:

$$V = \Delta F / |t_T - t_S|$$

   $t_S$ being the time of occurrence of a first characteristic event of the focal error signal (FES); $t_T$ being the time of occurrence of a second characteristic event of the focal error signal (FES);
   and $\Delta F$ being the spatial axial distance between two physical characteristics of said light beam (32) associated with said first and second characteristic events, respectively.

3. Method according to claim 2, wherein:

   said first characteristic event is a maximum value of the focal error signal (FES);
   said second characteristic event is a minimum value of the focal error signal (FES);
   $\Delta F$ being the astigmatic focal distance of said light beam (32).

4. Method for determining the sensitivity ($\gamma$), i.e. displacement as a function of control voltage, of a focal actuator (52) of an optical disc drive (1), wherein:

   a sloping control signal ($S_{CF}$) having a substantially constant slope is applied to the focal actuator (52) such as to cause an optical lens (34) to move axially with respect to an optical disc (2);
   a light beam (32) is generated, directed towards the optical disc (2), and caused to reflect from an optical disc (2), wherein the light beam passes said optical lens (34);
   the reflected light beam (32d) is received by an optical detector (35), wherein said light beam has astigmatism, i.e. a tangential focal spot (112) and a sagittal focal spot (122) at mutually different axial positions;
   an output signal ($S_R$) from said optical detector (35) is processed to derive therefrom a focal error signal (FES);
   an S-shaped curve (62) of the focal error signal (FES) is timed;
   and the sensitivity ($\gamma$) of the focal actuator (52) is calculated on the basis of the timing result of the S-shaped curve (62).

5. Method according to claim 4, wherein the sensitivity ($\gamma$) of the focal actuator (52) is calculated according to the formula:

$$\gamma = \Delta F / \left( |t_T - t_S| * d(S_{CF})/dt \right)$$

   $d(S_{CF})/dt$ being the time-derivative of the control signal $S_{CF}$;
   $t_S$ being the time of occurrence of a first characteristic event of the focal error signal (FES);
   $t_T$ being the time of occurrence of a second characteristic event of the focal error signal (FES);
   and $\Delta F$ being the spatial axial distance between two physical characteristics of said light beam (32) associated with said first and second characteristic events, respectively.

6. Method according to claim 5, wherein:

   said first characteristic event is a maximum value of the focal error signal (FES);
   said second characteristic event is a minimum value of the focal error signal (FES);
   $\Delta F$ being the astigmatic focal distance of said light beam (32).

7. Method for determining the distance (D) between two reflective layers of an optical disc (2), wherein:

   a light beam (32) is generated, directed towards the optical disc (2), and caused to reflect from the optical disc (2), wherein the light beam passes an optical lens (34);
   the reflected light beam (32d) is received by an optical detector (35), wherein said light beam has astigmatism, i.e. a tangential focal spot (112) and a sagittal focal spot (122) at mutually different axial positions;
   an output signal ($S_R$) from said optical detector (35) is processed to derive therefrom a focal error signal (FES);
   said optical lens (34) is caused to move axially with respect to said optical disc (2);
   the occurrence of characteristic events of S-shaped curves (62; 63) of the focal error signal (FES), associated with said two layers, is timed;
   at least one S-shaped curve (62) of the focal error signal (FES) is timed;
   and the distance (D) between said two reflective layers is calculated on the basis of the timing result of the S-shaped curve (62) on the one hand and on the other hand on the basis of the timing result of the characteristic events of said S-shaped curves (62; 63).

8. Method according to claim 7, wherein an axial speed (V) of the optical lens (34) is calculated according to the formula:

$$V = \Delta F / |t_T - t_S|$$

   $t_S$ being the time of occurrence of a first characteristic event of said at least one S-shaped curve (62) of the focal error signal (FES);
   $t_T$ being the time of occurrence of a second characteristic event of the same S-shaped curve (62) of the focal error signal (FES);
   and $\Delta F$ being the spatial axial distance between two physical characteristics of said light beam (32) associated with said first and second characteristic events, respectively.

9. Method according to claim 8, wherein:

said first characteristic event is a maximum value of the S-shaped curve (62) of the focal error signal (FES);
said second characteristic event is a minimum value of the same S-shaped curve (62) of the focal error signal (FES);
$\Delta F$ being the astigmatic focal distance of said light beam (32).

10. Method according to claim 8, wherein the distance (D) is calculated in accordance with the formula:

$$D = V * \Delta t_C$$

$\Delta t_C = t_{CR}$ - tcs being the time interval between said characteristic events of said two S-shaped curves (62; 63).

11. Method according to claim 10, each of said characteristic events of said two S-shaped curves (62; 63) being the zero-crossing of the corresponding S-shaped curve (62; 63).

12. Method according to claim 7, wherein the distance (D) is calculated according to the formula:

$$D = \Delta F * \Delta t_C / |t_T - t_S|$$

$t_S$ being the time of occurrence of a first characteristic event of said at least one S-shaped curve (62) of the focal error signal (FES);
$t_T$ being the time of occurrence of a second characteristic event of the same S-shaped curve (62) of the focal error signal (FES);
$\Delta F$ being the spatial axial distance between two physical characteristics of said light beam (32) associated with said first and second characteristic events, respectively;
and $\Delta t_C = t_{CR}$ - tcs being the time interval between said characteristic events of said two S-shaped curves (62; 63).

13. Method according to claim 12, wherein:

said first characteristic event of said S-shaped curve (62) is a maximum value of this S-shaped curve (62);
said second characteristic event of the same S-shaped curve (62) is a minimum value of the same S-shaped curve (62);
$\Delta F$ being the astigmatic focal distance of said light beam (32);
and each of said characteristic events of said two S-shaped curves (62; 63) being the zero-crossing of the corresponding S-shaped curve (62; 63).

14. Method for recognizing type (CD; DVD) of an optical disc, wherein:

a light beam (32) is generated, directed towards the optical disc (2), and caused to reflect from the optical disc (2), wherein the light beam passes an optical lens (34);
the reflected light beam (32d) is received by an optical detector (35);
an output signal ($S_R$) from said optical detector (35) is processed to derive therefrom a focal error signal (FES);
said optical lens (34) is caused to move axially with respect to said optical disc (2);

**characterized in that**:

said light beam has astigmatism, i.e. a tangential focal spot (112) and a sagittal focal spot (122) at mutually different axial positions;
the occurrence of characteristic events of S-shaped curves (62; 63) of the focal error signal (FES), associated with two layers, is timed;
at least one S-shaped curve (62) of the focal error signal (FES) is timed;

wherein a disc type parameter ($\alpha$) is calculated in accordance with the formula:

$$\alpha = \Delta t_C / (t_T - t_S)$$

$t_S$ being the time of occurrence of a first characteristic event of said at least one S-shaped curve (62) of the focal error signal (FES);

$t_T$ being the time of occurrence of a second characteristic event of the same S-shaped curve (62) of the focal error signal (FES);

$\Delta t_C = t_{CR} - t_{CS}$ being the time interval between said characteristic events of said two S-shaped curves (62; 63);

wherein the measured parameter value ($\alpha$) is compared with a predetermined reference value ($\alpha_{REF}$), and wherein it is decided that the optical disc is of a first type (CD) if the measured parameter value is larger than said reference value ($\alpha_{REF}$), and that the optical disc is of a second type (DVD) if the measured parameter value is smaller than said reference value ($\alpha_{REF}$).

**15.** Method according to claim 14, wherein:

said first characteristic event is a maximum value of the S-shaped curve (62) of the focal error signal (FES);
said second characteristic event is a minimum value of the same S-shaped curve (62) of the focal error signal (FES);
and each of said characteristic events of said two S-shaped curves (62; 63) being the zero-crossing of the corresponding S-shaped curve (62; 63).

**16.** Method for determining the distance (D) between two reflective layers of an optical disc (2), wherein:

a light beam (32) is generated, directed towards the optical disc (2), and caused to reflect from the optical disc (2), wherein the light beam passes an optical lens (34);
the reflected light beam (32d) is received by an optical detector (35), wherein said light beam has astigmatism, i.e. a tangential focal spot (112) and a sagittal focal spot (122) at mutually different axial positions;
an output signal ($S_R$) from said optical detector (35) is processed to derive therefrom a focal error signal (FES) and a data signal ($S_D$);
said optical lens (34) is caused to move axially with respect to said optical disc (2);
the occurrence of characteristic events of data signal curves (72; 73), associated with said two layers, is timed;
at least one S-shaped curve (62) of the focal error signal (FES) is timed;
and the distance (D) between said two reflective layers is calculated on the basis of the timing result of the S-shaped curve (62) on the one hand and on the other hand on the basis of the timing result of the characteristic events of said data signal curves (72; 73).

**17.** Method according to claim 16, wherein an axial speed (V) of the optical lens (34) is calculated according to the formula:

$$V = \Delta F / |t_T - t_S|$$

$t_S$ being the time of occurrence of a first characteristic event of said at least one S-shaped curve (62) of the focal error signal (FES);
$t_T$ being the time of occurrence of a second characteristic event of the same S-shaped curve (62) of the focal error signal (FES);
and $\Delta F$ being the spatial axial distance between two physical characteristics of said light beam (32) associated with said first and second characteristic events, respectively.

**18.** Method according to claim 17, wherein:

said first characteristic event is a maximum value of the S-shaped curve (62) of the focal error signal (FES);
said second characteristic event is a minimum value of the same S-shaped curve (62) of the focal error signal (FES);

ΔF being the astigmatic focal distance of said light beam (32).

**19.** Method according to claim 17, wherein the distance (D) is calculated in accordance with the formula:

$$D = V * \Delta t_C$$

$\Delta t_C = t_{CR}$ - tcs being the time interval between said characteristic events of said data signal curves (72; 73).

**20.** Method according to claim 19, each of said characteristic events of said data signal curves (72; 73) being the peak of the corresponding curve (72; 73) of the low frequency part of the data signal.

**21.** Method according to claim 16, wherein the distance (D) is calculated according to the formula:

$$D = \Delta F * \Delta t_C / |t_T - t_S|$$

$t_S$ being the time of occurrence of a first characteristic event of said at least one S-shaped curve (62) of the focal error signal (FES);
$t_T$ being the time of occurrence of a second characteristic event of the same S-shaped curve (62) of the focal error signal (FES);
ΔF being the spatial axial distance between two physical characteristics of said light beam (32) associated with said first and second characteristic events, respectively;
and $\Delta t_C = t_{CR}$ - tcs being the time interval between said characteristic events of said data signal curves (72; 73).

**22.** Method according to claim 21, wherein:

said first characteristic event of said S-shaped curve (62) is a maximum value of this S-shaped curve (62);
said second characteristic event of the same S-shaped curve (62) is a minimum value of the same S-shaped curve (62);
ΔF being the astigmatic focal distance of said light beam (32);
and each of said characteristic events of said data signal curves (72; 73) being the peak of the corresponding curve (72; 73) of the low frequency part of the data signal.

**23.** Method for recognizing type (CD; DVD) of an optical disc, wherein:

a light beam (32) is generated, directed towards the optical disc (2), and caused to reflect from the optical disc (2), wherein the light beam passes an optical lens (34); the reflected light beam (32d) is received by an optical detector (35);
an output signal ($S_R$) from said optical detector (35) is processed to derive therefrom a focal error signal (FES);
said optical lens (34) is caused to move axially with respect to said optical disc (2);

**characterized in that**:

said light beam has astigmatism, i.e. a tangential focal spot (112) and a sagittal focal spot (122) at mutually different axial positions;
the occurrence of characteristic events of data signal curves (72; 73), associated with two layers, is timed;
at least one S-shaped curve (62) of the focal error signal (FES) is timed;

wherein a disc type parameter (α) is calculated in accordance with the formula:

$$\alpha = \Delta t_C / (t_T - t_S)$$

$t_S$ being the time of occurrence of a first characteristic event of said at least one S-shaped curve (62) of the focal error signal (FES);

$_T$ being the time of occurrence of a second characteristic event of the same S-shaped curve (62) of the focal error signal (FES);

$t_C = t_{CR} - t_{CS}$ being the time interval between said characteristic events of said data signal curves (72; 73);

wherein the measured parameter value ($\alpha$) is compared with a predetermined reference value ($\alpha_{REF}$), and wherein it is decided that the optical disc is of a first type (CD) if the measured parameter value is larger than said reference value ($\alpha_{REF}$), and that the optical disc is of a second type (DVD) if the measured parameter value is smaller than said reference value ($\alpha_{REF}$).

24. Method according to claim 23, wherein:

said first characteristic event is a maximum value of the S-shaped curve (62) of the focal error signal (FES);
said second characteristic event is a minimum value of the same S-shaped curve (62) of the focal error signal (FES);
and each of said characteristic events of said data signal curves (72; 73) being the peak of the corresponding curve (72; 73) of the low frequency part of the data signal.

25. Method for recognizing type (CD; DVD) of an optical disc, wherein the distance (D) between two reflective layers of the optical disc (2) is measured by a method in accordance with any of claims 7-13, 16-22;
wherein the measured distance is compared with a predetermined reference value;
and wherein it is decided that the optical disc is of a first type (CD) if the measured distance (D) is larger than said reference value, and that the optical disc is of a second type (DVD) if the measured distance (D) is smaller than said reference value.

26. Method according to claim 25, wherein said distance (D) corresponds to the thickness of the disc, and wherein said predetermined reference value is preferably in the order of about 0.9 mm.

27. Method according to claim 7 or 16, wherein said distance (D) corresponds to the thickness of the disc.

28. Disc drive apparatus (1), suitable for storing information on or reading information from an optical storage disc (2), the apparatus comprising:

- light beam generating means (31) arranged to generate a light beam (32);
- an optical lens (34) for directing the light beam (32) towards the optical disc, the objective lens being arranged axially displaceable;
- a focal actuator (52) arranged for axially displacing the objective lens;
- an optical detector (35) arranged for receiving the reflected light beam (32d) reflected from the optical disc (2);
- a control circuit (90) having an output (94) coupled to a control input of the focal actuator, and having a read signal input (91) for receiving an output signal ($S_R$) from said optical detector (35);

wherein the control circuit (90) is designed to generate at its output (94) a control signal ($S_{CF}$) for controlling the focal actuator;
wherein the control circuit (90) is designed to generate its control signal ($S_{CF}$) such as to cause said optical lens (34) to be moved axially with respect to said optical disc (2);
wherein the control circuit (90) is designed to process the output signal ($S_R$) from said optical detector (35) to derive therefrom a focal error signal (FES);
**characterized in that**:

said light beam has astigmatism, i.e. a tangential focal spot (112) and a sagittal focal spot (122) at mutually different axial positions;

wherein the control circuit (90) is designed to time an S-shaped curve (62) of the focal error signal (FES);
and wherein the control circuit (90) is designed to perform a method according to any of the previous claims.

29. Disc drive apparatus (1), suitable for storing information on or reading information from an optical storage disc (2), the apparatus comprising:

- light beam generating means (31) arranged to generate a light beam (32);
- an optical lens (34) for directing the light beam (32) towards the optical disc, the objective lens being arranged axially displaceable;
- a focal actuator (52) arranged for axially displacing the objective lens;
- an optical detector (35) arranged for receiving the reflected light beam (32d) reflected from the optical disc (2);
- a control circuit (90) having an output (94) coupled to a control input of the focal actuator, and having a read signal input (91) for receiving an output signal ($S_R$) from said optical detector (35);

wherein the control circuit (90) is designed to generate at its output (94) a control signal ($S_{CF}$) for controlling the focal actuator;
wherein the control circuit (90) is designed to generate its control signal ($S_{CF}$) such as to cause said optical lens (34) to be moved axially with respect to said optical disc (2);
wherein the control circuit (90) is designed to process the output signal ($S_R$) from said optical detector (35) to derive therefrom a focal error signal (FES);
**characterized in that**:

said light beam has astigmatism, i.e. a tangential focal spot (112) and a sagittal focal spot (122) at mutually different axial positions;

wherein the control circuit (90) is designed to time an S-shaped curve (62) of the focal error signal (FES);
and wherein the control circuit (90) is designed to perform a disc type recognition method according to any of the previous claims 14, 15, 23-26;
wherein the disc drive apparatus (1) is adapted to handle one disc type only, and wherein the disc drive apparatus (1) rejects an inserted disc if the disc type recognition procedure reveals that the inserted disc is not a correct disc.

30. Disc drive apparatus (1), suitable for storing information on or reading information from an optical storage disc (2), the apparatus comprising:

- light beam generating means (31) arranged to generate a light beam (32);
- an optical lens (34) for directing the light beam (32) towards the optical disc, the objective lens being arranged axially displaceable;
- a focal actuator (52) arranged for axially displacing the objective lens;
- an optical detector (35) arranged for receiving the reflected light beam (32d) reflected from the optical disc (2);
- a control circuit (90) having an output (94) coupled to a control input of the focal actuator, and having a read signal input (91) for receiving an output signal ($S_R$) from said optical detector (35);

wherein the control circuit (90) is designed to generate at its output (94) a control signal ($S_{CF}$) for controlling the focal actuator;
wherein the control circuit (90) is designed to generate its control signal ($S_{CF}$) such as to cause said optical lens (34) to be moved axially with respect to said optical disc (2);
wherein the control circuit (90) is designed to process the output signal ($S_R$) from said optical detector (35) to derive therefrom a focal error signal (FES);
**characterized in that**:

said light beam has astigmatism, i.e. a tangential focal spot (112) and a sagittal focal spot (122) at mutually different axial positions;

wherein the control circuit (90) is designed to time an S-shaped curve (62) of the focal error signal (FES);
and wherein the control circuit (90) is designed to perform a disc type recognition method according to any of the previous claims 14, 15, 23-26;
wherein the disc drive apparatus (1) is adapted to handle at least two different disc types, and wherein the disc drive apparatus (1) proceeds with handling an inserted disc in accordance with the disc type as revealed by the disc type recognition procedure.

**Patentansprüche**

1. Verfahren zum Bestimmen der axialen Geschwindigkeit (V) einer optischen Linse (34) eines optischen Plattenlaufwerks (1), wobei:

ein Lichtstrahl (32) erzeugt, auf die optische Platte (2) hin ausgerichtet und dazu gebracht wird, von der optischen Platte (2) reflektiert zu werden, wobei der Lichtstrahl die optische Linse (34) durchläuft;

der reflektierte Lichtstrahl (32d) durch einen optischen Detektor (35) empfangen wird, wobei der Lichtstrahl einen Astigmatismus, d.h. einen tangentialen Brennfleck (112) und einen sagittalen Brennfleck (122), bei axialen Lagen aufweist, die sich voneinander unterscheiden;

ein Ausgangssignal ($S_R$) aus dem optischen Detektor (35) bearbeitet wird, um daraus ein Fokussierungsfehlersignal (FES) abzuleiten;

die optische Linse (34) dazu gebracht wird, sich axial bezüglich der optischen Platte (2) zu bewegen;

eine S-förmige Kurve (62) des Fokussierungsfehlersignals (FES) zeitlich zugeordnet wird;

und die axiale Geschwindigkeit (V) der optischen Linse (34) auf Basis des Ergebnisses der zeitlichen Zuordnung der S-förmigen Kurve (62) berechnet wird.

2. Verfahren nach Anspruch 1, wobei die axiale Geschwindigkeit (V) der optischen Linse (34) berechnet wird entsprechend der Formel:

$$V = \Delta F / |t_T - t_S|$$

wobei $t_S$ die Zeit des Auftretens eines ersten charakteristischen Ereignisses des Fokussierungsfehlersignals (FES) ist;

wobei $t_T$ die Zeit des Auftretens eines zweiten charakteristischen Ereignisses des Fokussierungsfehlersignals (FES) ist;

und wobei $\Delta F$ der räumliche axiale Abstand zwischen zwei physikalischen Charakteristiken des Lichtstrahls (32) ist, die mit dem ersten bzw. dem zweiten charakteristischen Ereignis verknüpft sind.

3. Verfahren nach Anspruch 2, wobei:

das erste charakteristische Ereignis ein Maximalwert des Fokussierungsfehlersignals (FES) ist;

das zweite charakteristische Ereignis ein Minimalwert des Fokussierungsfehlersignals (FES) ist;

$\Delta F$ der astigmatische Brennpunktabstand des Lichtstrahls (32) ist.

4. Verfahren zur Bestimmung der Empfindlichkeit ($\gamma$), d.h. der Verschiebung als Funktion der Steuerspannung, eines Fokussierungsstellglieds (52) eines optischen Plattenlaufwerks (1), wobei:

ein Anstiegssteuersignal ($S_{CF}$), das einen im Wesentlichen konstanten Anstieg aufweist, derart an das Fokussierungsstellglied (52) angelegt wird, dass es eine optische Linse (34) dazu bringt, sich axial bezüglich einer optischen Platte (2) zu bewegen;

ein Lichtstrahl (32) erzeugt, auf die optische Platte (2) hin ausgerichtet und dazu gebracht wird, von einer optischen Platte (2) reflektiert zu werden, wobei der Lichtstrahl die optische Linse (34) durchläuft;

der reflektierte Lichtstrahl (32d) durch einen optischen Detektor (35) empfangen wird, wobei der Lichtstrahl einen Astigmatismus, d.h. einen tangentialen Brennfleck (112) und einen sagittalen Brennfleck (122), bei axialen Lagen aufweist, die sich voneinander unterscheiden;

ein Ausgangssignal ($S_R$) aus dem optischen Detektor (35) bearbeitet wird, um daraus ein Fokussierungsfehlersignal (FES) abzuleiten;

eine S-förmige Kurve (62) des Fokussierungsfehlersignals (FES) zeitlich zugeordnet wird;

und die Empfindlichkeit ($\gamma$) des Fokussierungsstellglieds (52) auf Basis des Ergebnisses der zeitlichen Zuordnung der S-förmigen Kurve (62) berechnet wird.

5. Verfahren nach Anspruch 4, wobei die Empfindlichkeit ($\gamma$) des Fokussierungsstellglieds (52) berechnet wird entsprechend der Formel:

$$\gamma = \Delta F / (|t_T - t_S| * d(S_{CF})/dt\,)$$

wobei $d(S_{CF})/dt$ die Zeitableitung des Steuersignals $S_{CF}$ ist;

wobei $t_S$ die Zeit des Auftretens eines ersten charakteristischen Ereignisses des Fokussierungsfehlersignals (FES) ist;

wobei $t_T$ die Zeit des Auftretens eines zweiten charakteristischen Ereignisses des Fokussierungsfehlersignals (FES) ist;

und wobei $\Delta F$ der räumliche axiale Abstand zwischen zwei physikalischen Charakteristiken des Lichtstrahls (32) ist, die mit dem ersten bzw. dem zweiten charakteristischen Ereignis verknüpft sind.

6. Verfahren nach Anspruch 5, wobei:

das erste charakteristische Ereignis ein Maximalwert des Fokussierungsfehlersignals (FES) ist;
das zweite charakteristische Ereignis ein Minimalwert des Fokussierungsfehlersignals (FES) ist;
$\Delta F$ der astigmatische Brennpunktabstand des Lichtstrahls (32) ist.

7. Verfahren zum Bestimmen des Abstandes (D) zwischen zwei Reflexionsschichten einer optischen Platte (2), wobei:

ein Lichtstrahl (32) erzeugt, auf die optische Platte (2) hin ausgerichtet und dazu gebracht wird, von der optischen Platte (2) reflektiert zu werden, wobei der Lichtstrahl eine optische Linse (34) durchläuft;
der reflektierte Lichtstrahl (32d) durch einen optischen Detektor (35) empfangen wird, wobei der Lichtstrahl einen Astigmatismus, d.h. einen tangentialen Brennfleck (112) und einen sagittalen Brennfleck (122), bei axialen Lagen aufweist, die sich voneinander unterscheiden;
ein Ausgangssignal ($S_R$) aus dem optischen Detektor (35) bearbeitet wird, um daraus ein Fokussierungsfehlersignal (FES) abzuleiten;
die optische Linse (34) dazu gebracht wird, sich axial bezüglich der optischen Platte (2) zu bewegen;
das Auftreten der charakteristischen Ereignissen der S-förmigen Kurven (62; 63) des Fokussierungsfehlersignals (FES), die mit den zwei Schichten verknüpft sind, zeitlich zugeordnet wird;
mindestens eine S-förmige Kurve (62) des Fokussierungsfehlersignals (FES) zeitlich zugeordnet wird;
und der Abstand (D) zwischen den zwei Reflexionsschichten auf Basis des Ergebnisses der zeitlichen Zuordnung der S-förmigen Kurve (62) einerseits und andererseits auf Basis des Ergebnisses der zeitlichen Zuordnung der charakteristischen Ereignisse der S-förmigen Kurven (62; 63) berechnet wird.

8. Verfahren nach Anspruch 7, wobei eine axiale Geschwindigkeit (V) der optischen Linse (34) berechnet wird entsprechend der Formel:

$$V = \Delta F \, / \, |t_T - t_S|$$

wobei $t_S$ die Zeit des Auftretens eines ersten charakteristischen Ereignisses von der mindestens einen S-förmigen Kurve (62) des Fokussierungsfehlersignals (FES) ist;
wobei $t_T$ die Zeit des Auftretens eines zweiten charakteristischen Ereignisses derselben S-förmigen Kurve (62) des Fokussierungsfehlersignals (FES) ist;
und wobei $\Delta F$ der räumliche axiale Abstand zwischen zwei physikalischen Charakteristiken des Lichtstrahls (32) ist, die mit dem ersten bzw. dem zweiten charakteristischen Ereignis verknüpft sind.

9. Verfahren nach Anspruch 8, wobei:

das erste charakteristische Ereignis ein Maximalwert der S-förmigen Kurve (62) des Fokussierungsfehlersignals (FES) ist;
das zweite charakteristische Ereignis ein Minimalwert derselben S-förmigen Kurve (62) des Fokussierungsfehlersignals (FES) ist;
$\Delta F$ der astigmatische Brennpunktabstand des Lichtstrahls (32) ist.

10. Verfahren nach Anspruch 8, wobei der Abstand (D) berechnet wird entsprechend der Formel:

$$D = V * \Delta t_C$$

EP 1 614 109 B1

wobei $\Delta t_C = t_{CR} - t_{CS}$ das Zeitintervall zwischen den charakteristischen Ereignissen der zwei S-förmigen Kurven (62; 63) ist.

11. Verfahren nach Anspruch 10, wobei jedes der charakteristischen Ereignisse der zwei S-förmigen Kurven (62; 63) der Nulldurchgang der entsprechenden S-förmigen Kurve (62; 63) ist.

12. Verfahren nach Anspruch 7, wobei der Abstand (D) berechnet wird entsprechend der Formel:

$$D = \Delta F * \Delta t_C / |t_T - t_S|$$

wobei $t_S$ die Zeit des Auftretens eines ersten charakteristischen Ereignisses von der mindestens einen S-förmigen Kurve (62) des Fokussierungsfehlersignals (FES) ist;
wobei $t_T$ die Zeit des Auftretens eines zweiten charakteristischen Ereignisses derselben S-förmigen Kurve (62) des Fokussierungsfehlersignals (FES) ist;
wobei $\Delta F$ der räumliche axiale Abstand zwischen zwei physikalischen Charakteristiken des Lichtstrahls (32) ist, die mit dem ersten bzw. dem zweiten charakteristischen Ereignis verknüpft sind;
und wobei $\Delta t_C = t_{CR} - t_{CS}$ das Zeitintervall zwischen den charakteristischen Ereignissen der zwei S-förmigen Kurven (62; 63) ist.

13. Verfahren nach Anspruch 12, wobei:

das erste charakteristische Ereignis der S-förmigen Kurve (62) ein Maximalwert dieser S-förmigen Kurve (62) ist;
das zweite charakteristische Ereignis derselben S-förmigen Kurve (62) ein Minimalwert derselben S-förmigen Kurve (62) ist;
$\Delta F$ der astigmatische Brennpunktabstand des Lichtstrahls (32) ist;
und jedes der charakteristischen Ereignisse der zwei S-förmigen Kurven (62; 63) der Nulldurchgang der entsprechenden S-förmigen Kurve (62; 63) ist.

14. Verfahren zum Erkennen des Typs (CD; DVD) einer optischen Platte, wobei:

ein Lichtstrahl (32) erzeugt, auf die optische Platte (2) hin ausgerichtet und dazu gebracht wird, von der optischen Platte (2) reflektiert zu werden, wobei der Lichtstrahl eine optische Linse (34) durchläuft;
der reflektierte Lichtstrahl (32d) durch einen optischen Detektor (35) empfangen wird;
ein Ausgangssignal ($S_R$) aus dem optischen Detektor (35) bearbeitet wird, um daraus ein Fokussierungsfehlersignal (FES) abzuleiten;
die optische Linse (34) dazu gebracht wird, sich axial bezüglich der optischen Platte (2) zu bewegen;

**dadurch gekennzeichnet, dass**:

der Lichtstrahl einen Astigmatismus, d.h. einen tangentialen Brennfleck (112) und einen sagittalen Brennfleck (122), bei axialen Lagen aufweist, die sich voneinander unterscheiden;
das Auftreten der charakteristischen Ereignisse von S-förmigen Kurven (62; 63) des Fokussierungsfehlersignals (FES), die mit den zwei Schichten verknüpft sind, zeitlich zugeordnet wird;
mindestens eine S-förmige Kurve (62) des Fokussierungsfehlersignals (FES) zeitlich zugeordnet wird;

wobei ein Plattentypparameter ($\alpha$) berechnet wird entsprechend der Formel:

$$\alpha = \Delta t_C / (t_T - t_S)$$

wobei $t_S$ die Zeit des Auftretens eines ersten charakteristischen Ereignisses von der mindestens einen S-förmigen Kurve (62) des Fokussierungsfehlersignals (FES) ist;
wobei $t_T$ die Zeit des Auftretens eines zweiten charakteristischen Ereignisses derselben S-förmigen Kurve (62) des Fokussierungsfehlersignals (FES) ist;
wobei $\Delta t_C = t_{CR} - t_{CS}$ das Zeitintervall zwischen den charakteristischen Ereignissen der zwei S-förmigen Kurven

16

(62; 63) ist;

wobei der gemessene Parameter ($\alpha$) mit einem vorgegebenen Bezugswert ($\alpha_{REF}$) verglichen wird und wobei entschieden wird, dass die optische Platte von einem ersten Typ (CD) ist, wenn der gemessene Parameterwert größer als der Bezugswert ($\alpha_{REF}$) ist, und dass die optische Platte von einem zweiten Typ (DVD) ist, wenn der gemessene Parameterwert kleiner als der Bezugswert ($\alpha_{REF}$) ist.

**15.** Verfahren nach Anspruch 14, wobei:

das erste charakteristische Ereignis ein Maximalwert der S-förmigen Kurve (62) des Fokussierungsfehlersignals (FES) ist;

das zweite charakteristische Ereignis ein Minimalwert derselben S-förmigen Kurve (62) des Fokussierungsfehlersignals (FES) ist;

und jedes der charakteristischen Ereignisse der zwei S-förmigen Kurven (62; 63) der Nulldurchgang der entsprechenden S-förmigen Kurve (62; 63) ist.

**16.** Verfahren zum Bestimmen des Abstandes (D) zwischen zwei Reflexionsschichten einer optischen Platte (2), wobei

ein Lichtstrahl (32) erzeugt, auf die optische Platte (2) hin ausgerichtet und dazu gebracht wird, von der optischen Platte (2) reflektiert zu werden, wobei der Lichtstrahl eine optische Linse (34) durchläuft;

der reflektierte Lichtstrahl (32d) durch einen optischen Detektor (35) empfangen wird, wobei der Lichtstrahl einen Astigmatismus, d.h. einen tangentialen Brennfleck (112) und einen sagittalen Brennfleck (122), bei axialen Lagen aufweist, die sich voneinander unterscheiden;

ein Ausgangssignal ($S_R$) aus dem optischen Detektor (35) bearbeitet wird, um daraus ein Fokussierungsfehlersignal (FES) und ein Datensignal ($S_D$) abzuleiten;

die optische Linse (34) dazu gebracht wird, sich axial bezüglich der optischen Platte (2) zu bewegen;

das Auftreten der charakteristischen Ereignisse der Datensignalkurven (72; 73), die mit den zwei Schichten verknüpft sind, zeitlich zugeordnet wird;

mindestens eine S-förmige Kurve (62) des Fokussierungsfehlersignals (FES) zeitlich zugeordnet wird;

und der Abstand (D) zwischen den zwei Reflexionsschichten auf Basis des Ergebnisses der zeitlichen Zuordnung der S-förmigen Kurve (62) einerseits und andererseits auf Basis des Ergebnisses der zeitlichen Zuordnung der charakteristischen Ereignisse der Datensignalkurven (72; 73) berechnet wird.

**17.** Verfahren nach Anspruch 16, wobei die axiale Geschwindigkeit (V) der optischen Linse (34) berechnet wird entsprechend der Formel:

$$V = \Delta F \, / \, |t_T - t_S|$$

wobei $t_S$ die Zeit des Auftretens eines ersten charakteristischen Ereignisses von mindestens einer S-förmigen Kurve (62) des Fokussierungsfehlersignals (FES) ist;

wobei $t_T$ die Zeit des Auftretens eines zweiten charakteristischen Ereignisses derselben S-förmigen Kurve (62) des Fokussierungsfehlersignals (FES) ist;

und wobei $\Delta F$ der räumliche axiale Abstand zwischen zwei physikalischen Charakteristiken des Lichtstrahls (32) ist, die mit dem ersten bzw. dem zweiten charakteristischen Ereignis verknüpft sind.

**18.** Verfahren nach Anspruch 17, wobei:

das erste charakteristische Ereignis ein Maximalwert der S-förmigen Kurve (62) des Fokussierungsfehlersignals (FES) ist;

das zweite charakteristische Ereignis ein Minimalwert derselben S-förmigen Kurve (62) des Fokussierungsfehlersignals (FES) ist;

$\Delta F$ der astigmatische Brennpunktabstand des Lichtstrahls (32) ist.

**19.** Verfahren nach Anspruch 17, wobei der Abstand (D) berechnet wird entsprechend der Formel:

$$D = V * \Delta t_C$$

wobei $\Delta t_C = t_{CR} - t_{CS}$ das Zeitintervall zwischen den charakteristischen Ereignissen der Datensignalkurven (72; 73) ist.

20. Verfahren nach Anspruch 19, wobei jedes der charakteristischen Ereignisse der Datensignalkurven (72; 73) der Spitzenwert der entsprechenden Kurve (72; 73) des Niederfrequenzteils des Datensignals ist.

21. Verfahren nach Anspruch 16, wobei der Abstand (D) berechnet wird entsprechend der Formel:

$$D = \Delta F * \Delta t_C / |t_T - t_S|$$

wobei $t_S$ die Zeit des Auftretens eines ersten charakteristischen Ereignisses von der mindestens einen S-förmigen Kurve (62) des Fokussierungsfehlersignals (FES) ist;
wobei $t_T$ die Zeit des Auftretens eines zweiten charakteristischen Ereignisses derselben S-förmigen Kurve (62) des Fokussierungsfehlersignals (FES) ist;
wobei $\Delta F$ der räumliche axiale Abstand zwischen zwei physikalischen Charakteristiken des Lichtstrahls (32) ist, die mit dem ersten bzw. dem zweiten charakteristischen Ereignis verknüpft sind;
und wobei $\Delta t_C = t_{CR} - tcs$ das Zeitintervall zwischen den charakteristischen Ereignissen der Datensignalkurven (72; 73) ist.

22. Verfahren nach Anspruch 21, wobei:

das erste charakteristische Ereignis der S-förmigen Kurve (62) ein Maximalwert dieser S-förmigen Kurve (62) ist;
das zweite charakteristische Ereignis derselben S-förmigen Kurve (62) ein Minimalwert derselben S-förmigen Kurve (62) ist;
$\Delta F$ der astigmatische Brennpunktabstand des Lichtstrahls (32) ist;
und jedes der charakteristischen Ereignisse der Datensignalkurven (72; 73) der Spitzenwert der entsprechenden Kurve (72; 73) des Niederfrequenzteils des Datensignals ist.

23. Verfahren zum Erkennen des Typs (CD; DVD) einer optischen Platte, wobei:

ein Lichtstrahl (32) erzeugt, auf die optische Platte (2) hin ausgerichtet und dazu gebracht wird, von der optischen Platte (2) reflektiert zu werden, wobei der Lichtstrahl eine optische Linse (34) durchläuft;
der reflektierte Lichtstrahl (32d) durch einen optischen Detektor (35) empfangen wird;
ein Ausgangssignal ($S_R$) aus dem optischen Detektor (35) bearbeitet wird, um daraus ein Fokussierungsfehlersignal (FES) abzuleiten;
die optische Linse (34) dazu gebracht wird, sich axial bezüglich der optischen Platte (2) zu bewegen;

**dadurch gekennzeichnet, dass**:

der Lichtstrahl einen Astigmatismus, d.h. einen tangentialen Brennfleck (112) und einen sagittalen Brennfleck (122), bei axialen Lagen aufweist, die sich voneinander unterscheiden;
das Auftreten der charakteristischen Ereignisse von Datensignalkurven (72; 73), die mit den zwei Schichten verknüpft sind, zeitlich zugeordnet wird;
mindestens eine S-förmige Kurve (62) des Fokussierungsfehlersignals (FES) zeitlich zugeordnet wird;

wobei ein Plattentypparameter ($\alpha$) berechnet wird entsprechend der Formel:

$$\alpha = \Delta t_C / (t_T - t_S)$$

wobei $t_S$ die Zeit des Auftretens eines ersten charakteristischen Ereignisses von der mindestens einen S-förmigen Kurve (62) des Fokussierungsfehlersignals (FES) ist;

wobei $t_T$ die Zeit des Auftretens eines zweiten charakteristischen Ereignisses derselben S-förmigen Kurve (62) des Fokussierungsfehlersignals (FES) ist;

wobei $\Delta t_C = t_{CR} - t_{CS}$ das Zeitintervall zwischen den charakteristischen Ereignissen der Datensignalkurven (72; 73) ist;

wobei der gemessene Parameter ($\alpha$) mit einem vorgegebenen Bezugswert ($\alpha_{REF}$) verglichen wird und wobei entschieden wird, dass die optische Platte von einem ersten Typ (CD) ist, wenn der gemessene Parameterwert größer als der Bezugswert ($\alpha_{REF}$) ist und dass die optische Platte von einem zweiten Typ (DVD) ist, wenn der gemessene Parameterwert kleiner als der Bezugswert ($\alpha_{REF}$) ist.

24. Verfahren nach Anspruch 23, wobei:

das erste charakteristische Ereignis ein Maximalwert der S-förmigen Kurve (62) des Fokussierungsfehlersignals (FES) ist;

das zweite charakteristische Ereignis ein Minimalwert derselben S-förmigen Kurve (62) des Fokussierungsfehlersignals (FES) ist;

und jedes der charakteristischen Ereignisse der Datensignalkurven (72; 73) der Spitzenwert der entsprechenden Kurve (72; 73) des Niederfrequenzteils des Datensignals ist.

25. Verfahren zum Erkennen des Typs (CD; DVD) einer optischen Platte, wobei der Abstand (D) zwischen zwei Reflexionsschichten der optischen Platte (2) durch ein Verfahren nach einem der Ansprüche 7- 13, 16-22 gemessen wird; wobei der gemessenen Abstand mit einem vorgegebenen Bezugswert verglichen wird; und wobei entschieden wird, dass die optische Platte von einem ersten Typ (CD) ist, wenn der gemessene Abstand (D) größer als der Bezugswert ist, und dass die optische Platte von einem zweiten Typ (DVD) ist, wenn der gemessene Abstand (D) kleiner als der Bezugswert ist.

26. Verfahren nach Anspruch 25, wobei der Abstand (D) der Dicke der Platte entspricht und wobei der vorgegebene Bezugswert vorzugsweise in der Größenordnung von etwa 0,9 mm liegt.

27. Verfahren nach Anspruch 7 oder 16, wobei der Abstand (D) der Dicke der Platte entspricht.

28. Plattenlaufwerkvorrichtung (1), die zum Speichern von Informationen auf eine oder zum Lesen von Informationen von einer optische(n) Speicherplatte (2) geeignet ist, wobei die Vorrichtung enthält:

- Lichtstrahlerzeugungsmittel (31), die zum Erzeugen eines Lichtstrahls (32) angeordnet sind;
- eine optische Linse (34) zum Ausrichten des Lichtstrahls (32) auf die optische Platte, wobei die Objektivlinse axial verschiebbar angeordnet ist;
- ein Fokussierungsstellglied (52), das für die axiale Verschiebung der Objektivlinse angeordnet ist;
- einen optischer Detektor (35), der für den Empfang des reflektierten Lichtstrahls (32d), der von der optischen Platte (2) reflektiert wurde, angeordnet ist;
- einen Steuerkreis (90), der einen Ausgang (94) aufweist, der mit einem Steuereingang des Fokussierungsstellglieds verbunden ist, und der einen Lesesignaleingang (91) für den Empfang eines Ausgangssignals ($S_R$) aus dem optischen Detektor (35) aufweist;

wobei der Steuereingang (90) ausgelegt ist, an seinem Ausgang (94) ein Steuersignal ($S_{CF}$) zum Steuern des Fokussierungsstellglieds zu erzeugen;

wobei der Steuerkreis (90) ausgelegt ist, sein Steuersignal ($S_{CF}$) derart zu erzeugen, dass die optische Linse (34) veranlasst wird, sich axial bezüglich der optischen Platte (2) zu bewegen;

wobei der Steuerkreis (90) ausgelegt ist, das Ausgangssignal ($S_R$) aus dem optischen Detektor (35) zu bearbeiten, um daraus ein Fokussierungsfehlersignal (FES) abzuleiten;

**dadurch gekennzeichnet, dass**:

der Lichtstrahl einen Astigmatismus, d.h. einen tangentialen Brennfleck (112) und einen sagittalen Brennfleck (122), bei axialen Lagen aufweist, die sich voneinander unterscheiden;

wobei das Steuersignal (90) ausgelegt ist, eine S-förmige Kurve (62) des Fokussierungsfehlersignals (FES) zeitlich zuzuordnen;

und wobei der Steuerkreis (90) ausgelegt ist, ein Verfahren nach einem der vorhergehenden Ansprüche auszuführen.

**29.** Plattenlaufwerkvorrichtung (1), die zum Speichern von Informationen auf eine oder zum Lesen von Informationen von einer optische(n) Speicherplatte (2) geeignet ist, wobei die Vorrichtung enthält:

- Lichtstrahlerzeugungsmittel (31), die zum Erzeugen eines Lichtstrahls (32) angeordnet sind;
- eine optische Linse (34) zum Ausrichten des Lichtstrahls (32) auf die optische Platte, wobei die Objektivlinse axial verschiebbar angeordnet ist;
- ein Fokussierungsstellglied (52), das für die axiale Verschiebung der Objektivlinse angeordnet ist;
- einen optischer Detektor (35), der für den Empfang des reflektierten Lichtstrahls (32d), der von der optischen Platte (2) reflektiert wurde, angeordnet ist;
- einen Steuerkreis (90), der einen Ausgang (94) aufweist, der mit einem Steuereingang des Fokussierungsstellglieds verbunden ist, und der einen Lesesignaleingang (91) für den Empfang eines Ausgangssignals ($S_R$) aus dem optischen Detektor (35) aufweist;

wobei der Steuereingang (90) ausgelegt ist, an seinem Ausgang (94) ein Steuersignal ($S_{CF}$) zum Steuern des Fokussierungsstellglieds zu erzeugen;
wobei der Steuerkreis (90) ausgelegt ist, sein Steuersignal ($S_{CF}$) derart zu erzeugen, dass die optische Linse (34) veranlasst wird, sich axial bezüglich der optischen Platte (2) zu bewegen;
wobei der Steuerkreis (90) ausgelegt ist, das Ausgangssignal ($S_R$) aus dem optischen Detektor (35) zu bearbeiten, um daraus ein Fokussierungsfehlersignal (FES) abzuleiten;
**dadurch gekennzeichnet, dass**:

der Lichtstrahl einen Astigmatismus, d.h. einen tangentialen Brennfleck (112) und einen sagittalen Brennfleck (122), bei axialen Lagen aufweist, die sich voneinander unterscheiden;

wobei das Steuersignal (90) ausgelegt ist, eine S-förmige Kurve (62) des Fokussierungsfehlersignals (FES) zeitlich zuzuordnen;
und wobei der Steuerkreis (90) ausgelegt ist, ein Plattentyperkennungsverfahren nach einem der vorhergehenden Ansprüche 14, 15, 23 - 26 auszuführen;
wobei die Plattenlaufwerkvorrichtung (1) geeignet ist, nur mit einem Plattentyp umzugehen, und wobei die Plattenlaufwerkvorrichtung (1) eine eingelegte Platte zurückweist, wenn der Plattentyperkennungsvorgang offenlegt, dass die eingelegte Platte keine zutreffende Platte ist.

**30.** Plattenlaufwerkvorrichtung (1), die zum Speichern von Informationen auf eine oder zum Lesen von Informationen von einer optische(n) Speicherplatte (2) geeignet ist, wobei die Vorrichtung enthält:

- Lichtstrahlerzeugungsmittel (31), die zum Erzeugen eines Lichtstrahls (32) angeordnet sind;
- eine optische Linse (34) zum Ausrichten des Lichtstrahls (32) auf die optische Platte, wobei die Objektivlinse axial verschiebbar angeordnet ist;
- ein Fokussierungsstellglied (52), das für die axiale Verschiebung der Objektivlinse angeordnet ist;
- einen optischer Detektor (35), der für den Empfang des reflektierten Lichtstrahls (32d), der von der optischen Platte (2) reflektiert wurde, angeordnet ist;
- einen Steuerkreis (90), der einen Ausgang (94) aufweist, der mit einem Steuereingang des Fokussierungsstellglieds verbunden ist, und der einen Lesesignaleingang (91) für den Empfang eines Ausgangssignals ($S_R$) aus dem optischen Detektor (35) aufweist;

wobei der Steuereingang (90) ausgelegt ist, an seinem Ausgang (94) ein Steuersignal ($S_{CF}$) zum Steuern des Fokussierungsstellglieds zu erzeugen;
wobei der Steuerkreis (90) ausgelegt ist, sein Steuersignal ($S_{CF}$) derart zu erzeugen, dass die optische Linse (34) veranlasst wird, sich axial bezüglich der optischen Platte (2) zu bewegen;
wobei der Steuerkreis (90) ausgelegt ist, das Ausgangssignal ($S_R$) aus dem optischen Detektor (35) zu bearbeiten, um daraus ein Fokussierungsfehlersignal (FES) abzuleiten;
**dadurch gekennzeichnet, dass**:

der Lichtstrahl einen Astigmatismus, d.h. einen tangentialen Brennfleck (112) und einen sagittalen Brennfleck (122), bei axialen Lagen aufweist, die sich voneinander unterscheiden;

wobei das Steuersignal (90) ausgelegt ist, eine S-förmige Kurve (62) des Fokussierungsfehlersignals (FES) zeitlich zuzuordnen;

und wobei der Steuerkreis (90) ausgelegt ist, ein Plattentyperkennungsverfahren nach einem der vorhergehenden Ansprüche 14, 15, 23 - 26 auszuführen; wobei die Plattenlaufwerkvorrichtung (1) geeignet ist, mit mindestens zwei unterschiedlichen Plattentypen umzugehen, und wobei die Plattenlaufwerkvorrichtung (1) fortfährt, mit einer eingelegten Platte in Übereinstimmung mit dem Plattentyp umzugehen, der durch den Plattentyperkennungsvorgang offengelegt wurde.

**Revendications**

1. Procédé pour déterminer la vitesse axiale (V) d'une lentille optique (34) d'un lecteur de disque optique (1), dans lequel :

   un faisceau de lumière (32) est généré, dirigé vers le disque optique (2), et conduit à être réfléchi par le disque optique (2), où le faisceau de lumière passe par ladite lentille optique (34) ;
   le faisceau de lumière réfléchi (32d) est reçu par un détecteur optique (35), où ledit faisceau de lumière a de l'astigmatisme, c'est-à-dire un spot focal tangentiel (112) et un spot focal sagittal (122) en des positions axiales mutuellement différentes ;
   un signal de sortie ($S_R$) dudit détecteur optique (35) est traité pour en dériver un signal d'erreur focale (FES) ;
   ladite lentille optique (34) est amenée à se déplacer suivant l'axe par rapport audit disque optique (2) ;
   une courbe en forme de S (62) du signal d'erreur focale (FES) est chronométrée ;
   et la vitesse axiale (V) de la lentille optique (34) est calculée sur base des résultats chronométrés de la courbe en forme de S (62).

2. Procédé selon la revendication 1, où la vitesse axiale (V) de la lentille optique (34) est calculée selon la formule :

$$V = \Delta F / \left| t_T - t_S \right|$$

   $t_S$ étant l'instant d'occurrence du premier événement caractéristique du signal d'erreur focale (FES) ;
   $t_T$ étant l'instant d'occurrence du second événement caractéristique du signal d'erreur focale (FES) ;
   et $\Delta F$ étant la distance spatiale axiale entre deux caractéristiques physiques dudit faisceau de lumière (32), associées respectivement auxdits premier et second évènements caractéristiques.

3. Procédé selon la revendication 2, dans lequel :

   ledit premier événement caractéristique est une valeur maximale du signal d'erreur focale (FES) ;
   ledit second événement caractéristique est une valeur minimale du signal d'erreur focale (FES) ;
   $\Delta F$ étant la distance focale astigmatique dudit faisceau de lumière (32).

4. Procédé pour déterminer la sensibilité ($\gamma$), c'est-à-dire le déplacement comme fonction de la tension de commande, de l'actionneur focal (52) d'un lecteur de disque optique (1), dans lequel :

   un signal de commande ($S_{CF}$) en pente, ayant une pente essentiellement constante, est appliqué à l'actionneur focal (52) de manière à causer la lentille optique (34) à se déplacer suivant l'axe par rapport au disque optique (2) ;
   un faisceau de lumière (32) est généré, dirigé vers le disque optique (2), et conduit à être réfléchi par le disque optique (2), où le faisceau de lumière passe par ladite lentille optique (34) ;
   le faisceau de lumière réfléchi (32d) est reçu par un détecteur optique (35), dans lequel ledit faisceau de lumière a de l'astigmatisme, c'est-à-dire un spot focal tangentiel (112) et un spot focal sagittal (122) en des positions axiales mutuellement différentes ;
   un signal de sortie ($S_R$) dudit détecteur optique (35) est traité pour en dériver un signal d'erreur focale (FES) ;
   une courbe en forme de S (62) du signal d'erreur focale (FES) est chronométrée ;
   et la sensibilité ($\gamma$) de l'actionneur focal (52) est calculée sur base des résultats chronométrés de la courbe en forme de S (62).

5. Procédé selon la revendication 4, dans lequel la sensibilité ($\gamma$) de l'actionneur focal (52) est calculée suivant le formule :

$$\gamma =\Delta F/(\,|\,t_T{-}t_S\,|\,*d(S_{CF})/dt)$$

$d(S_{CF})/dt$ étant la dérivée par rapport au temps du signal de commande $S_{CF}$ ;
$t_S$ étant l'instant d'occurrence du premier événement caractéristique du signal d'erreur focale (FES) ;
$t_T$ étant l'instant d'occurrence du second événement caractéristique du signal d'erreur focale (FES) ;
et $\Delta F$ étant la distance spatiale axiale entre deux caractéristiques physiques dudit faisceau de lumière (32), associées respectivement auxdits premier et second évènements caractéristiques.

6.  Procédé selon la revendication 5, dans lequel :

    ledit premier événement caractéristique est une valeur maximale du signal d'erreur focale (FES) ;
    ledit second événement caractéristique est une valeur minimale du signal d'erreur focale (FES) ;
    $\Delta F$ étant la distance focale astigmatique dudit faisceau de lumière (32).

7.  Procédé pour déterminer la distance (D) entre deux couches réfléchissantes d'un disque optique (2), dans lequel :

    un faisceau de lumière (32) est généré, dirigé vers le disque optique (2), et conduit à être réfléchi par le disque optique (2), où le faisceau de lumière passe par ladite lentille optique (34) ;
    le faisceau de lumière réfléchi (32d) est reçu par un détecteur optique (35), dans lequel ledit faisceau de lumière a de l'astigmatisme, c'est-à-dire un spot focal tangentiel (112) et un spot focal sagittal (122) en des positions axiales mutuellement différentes ;
    un signal de sortie ($S_R$) dudit détecteur optique (35) est traité pour en dériver un signal d'erreur focale (FES) ;
    ladite lentille optique (34) est amenée à se déplacer suivant l'axe par rapport au disque optique (2) ;
    l'occurrence d'évènements caractéristiques des courbes en forme de S (62 ; 63) du signal d'erreur focale (FES), associées avec lesdites deux couches, est chronométré ;
    au moins une courbe en forme de S (62) du signal d'erreur focale (FES) est chronométrée ;
    et la distance (D) entre les deux couches réfléchissantes est calculée d'une part sur base du résultat de chronométrage de la courbe en forme de S (62) et d'autre part sur la base du résultat de chronométrage des évènements caractéristiques desdites courbes en forme de S (62 ; 63).

8.  Procédé selon la revendication 7, dans lequel, une vitesse axiale (V) de la lentille optique (34) est calculée selon la formule :

$$V=\Delta F/\,|\,t_T{-}t_S\,|$$

$t_S$ étant l'instant d'occurrence du premier événement caractéristique d'au moins une dite courbe en forme de S (62) du signal d'erreur focale (FES) ;
$t_T$ étant l'instant d'occurrence du second événement caractéristique de la même courbe en forme de S (62) du signal d'erreur focale (FES) ;
et $\Delta F$ étant la distance spatiale axiale entre deux caractéristiques physiques dudit faisceau de lumière (32), associées respectivement auxdits premier et second évènements caractéristiques.

9.  Procédé selon la revendication 8, dans lequel :

    ledit premier événement caractéristique est une valeur maximale de la courbe en forme de S (62) du signal d'erreur focale (FES) ;
    ledit second événement caractéristique est une valeur minimale de la même courbe en forme de S (62) du signal d'erreur focale (FES) ;
    $\Delta F$ étant la distance focale astigmatique dudit faisceau de lumière (32).

10. Procédé selon la revendication 8, dans lequel la distance (D) est calculée selon la formule :

$$D = V * \Delta t_C$$

$\Delta t_C = t_{CR} - t_{CS}$ étant l'intervalle de temps entre lesdits évènements caractéristiques desdites deux courbes en forme de S (62 ; 63).

**11.** Procédé selon la revendication 10, chacun des évènements caractéristiques desdites deux courbes en forme de S (62 ; 63) étant le passage par zéro de la courbe en forme de S correspondante (62 ; 63).

**12.** Procédé selon la revendication 7, dans lequel la distance (D) est calculée selon la formule :

$$D = \Delta F * \Delta t_C \, / \, \left| t_T - t_S \right|$$

$t_S$ étant l'instant d'occurrence du premier événement caractéristique d'au moins une dite courbe en forme de S (62) du signal d'erreur focale (FES) ;

$t_T$ étant l'instant d'occurrence du second événement caractéristique de la même courbe en forme de S (62) du signal d'erreur focale (FES) ;

$\Delta F$ étant la distance spatiale axiale entre deux caractéristiques physiques dudit faisceau de lumière (32), associées respectivement auxdits, premier et second, évènements caractéristiques.

et $\Delta t_C = t_{CR} - t_{CS}$ étant l'intervalle de temps entre lesdits évènements caractéristiques desdites deux courbes en forme de S (62 ; 63).

**13.** Procédé selon la revendication 12, dans lequel :

ledit premier événement caractéristique de ladite courbe en forme de S (62) est une valeur maximale de cette courbe en forme de S (62) ;

ledit second événement caractéristique de la même courbe en forme de S (62) est une valeur minimale de la même courbe en forme de S (62) ;

$\Delta F$ étant la distance focale astigmatique dudit faisceau de lumière (32).

Et chacun desdits évènements caractéristiques desdites deux courbes en forme de S (62 ; 63) étant le passage par zéro de la courbe en forme de S correspondante (62 ;63).

**14.** procédé pour reconnaître le type (CD ; DVD) d'un disque optique, dans lequel :

un faisceau de lumière (32) est généré, dirigé vers le disque optique (2), et conduit à être réfléchi par le disque optique (2), où le faisceau de lumière passe par une lentille optique (34) ;

le faisceau de lumière réfléchi (32d) est reçu par un détecteur optique (35);

un signal de sortie ($S_R$) dudit détecteur optique (35) est traité pour en dériver un signal d'erreur focale (FES) ;

ladite lentille optique (34) est amenée à se déplacer suivant l'axe par rapport au disque optique (2) ;

**caractérisé en ce que** :

ledit faisceau de lumière a de l'astigmatisme, c'est-à-dire , le spot focal tangentiel (112) et le spot focal sagittal (122) en des positions mutuellement différentes ;

l'occurrence d'évènements caractéristiques des courbes en forme de S (62 ; 63) du signal d'erreur focale (FES), associées avec deux couches, est chronométré ;

au moins une courbe en forme de S (62) du signal d'erreur focale (FES) est chronométrée ;

dans lequel un paramètre de type de disque ($\alpha$) est calculé selon la formule :

$$\alpha = \Delta t_C \, / \, (t_T - t_S)$$

$t_S$ étant l'instant d'occurrence du premier événement caractéristique d'au moins une dite courbe en forme de S (62) du signal d'erreur focale (FES) ;

$t_T$ étant l'instant d'occurrence du second événement caractéristique de la même courbe en forme de S (62) du signal d'erreur focale (FES) ;

$\Delta t_C = t_{CR}\text{-}t_{CS}$ étant l'intervalle de temps entre lesdits évènements caractéristiques desdites deux courbes en forme de S (62 ; 63).

où la valeur mesurée du paramètre ($\alpha$) est comparée avec une référence prédéterminée ($\alpha_{REF}$), et où il est décidé que le disque optique est d'un premier type (CD) si la valeur mesurée du paramètre est plus grande que ladite valeur de référence ($\alpha_{REF}$), et que le disque optique est d'un second type (DVD) si la valeur mesurée du paramètre est plus petite que ladite référence ($\alpha_{REF}$).

**15.** Procédé selon la revendication 14, dans lequel :

ledit premier événement caractéristique est une valeur maximale de la courbe en forme de S (62) du signal d'erreur focale (FES) ;

ledit second événement caractéristique est une valeur minimale de la même courbe en forme de S (62) du signal d'erreur focale (FES) ;

et chacun desdits évènements caractéristiques desdites deux courbes en forme de S (62 ; 63) étant le passage par zéro de la courbe en forme de S correspondante (62 ; 63).

**16.** Procédé pour déterminer la distance (D) entre deux couches réfléchissantes d'un disque optique (2), dans lequel :

un faisceau de lumière (32) est généré, dirigé vers le disque optique (2), et conduit à être réfléchi par le disque optique (2), où le faisceau de lumière passe par une lentille optique (34) ;

le faisceau de lumière réfléchi (32d) est reçu par un détecteur optique (35), dans lequel ledit faisceau de lumière a de l'astigmatisme, c'est-à-dire un spot focal tangentiel (112) et un spot focal sagittal (122) en des positions axiales mutuellement différentes;

un signal de sortie ($S_R$) dudit détecteur optique (35) est traité pour en dériver un signal d'erreur focale (FES) et un signal de données ($S_D$);

ladite lentille optique (34) est amenée à se déplacer suivant l'axe par rapport au disque optique (2) ;

l'occurrence des évènements caractéristiques des courbes de signaux de données (72 ; 73), associés avec lesdites deux couches, est chronométrée ;

au moins une courbe en forme de S (62) du signal d'erreur focale (FES) est chronométrée ;

et la distance (D) entre les deux couches réfléchissantes est calculée d'une part sur base du résultat de chronométrage de la courbe en forme de S (62) et d'autre part sur la base du résultat de chronométrage des évènements caractéristiques desdites courbes de signaux de données (72 ; 73).

**17.** Procédé selon la revendication 16, dans lequel, une vitesse axiale (V) de la lentille optique (34) est calculée selon la formule :

$$V = \Delta F / \left| t_T - t_S \right|$$

$t_S$ étant l'instant d'occurrence du premier événement caractéristique d'au moins une dite courbe en forme de S (62) du signal d'erreur focale (FES) ;

$t_T$ étant l'instant d'occurrence du second événement caractéristique de la même courbe en forme de S (62) du signal d'erreur focale (FES) ;

et $\Delta F$ étant la distance spatiale axiale entre deux caractéristiques physiques dudit faisceau de lumière (32) associées respectivement auxdits premier et second évènements caractéristiques.

**18.** Procédé selon la revendication 17, dans lequel :

ledit premier événement caractéristique est une valeur maximale de la courbe en forme de S (62) du signal d'erreur focale (FES) ;

ledit second événement caractéristique est une valeur minimale de la même courbe en forme de S (62) du signal d'erreur focale (FES) ;

$\Delta F$ étant la distance focale astigmatique dudit faisceau de lumière (32).

**19.** Procédé selon la revendication 17, dans lequel la distance (D) est calculée selon la formule :

$$D = V * \Delta t_C$$

$\Delta t_C = t_{CR} - t_{CS}$ étant l'intervalle de temps entre lesdits évènements caractéristiques desdites deux courbes du signal de données (72 ; 73).

**20.** Procédé selon la revendication 19, chacun des évènements caractéristiques desdites courbes de signal de données (72 ; 73) étant le pic de la courbe correspondante (72 ; 73) de la partie basse fréquence du signal de données.

**21.** Procédé selon la revendication 16, dans lequel la distance (D) est calculée selon la formule :

$$D = \Delta F * \Delta t_C \, / \, \left| t_T - t_S \right|$$

$t_S$ étant l'instant d'occurrence du premier événement caractéristique d'au moins une dite courbe en forme de S (62) du signal d'erreur focale (FES) ;
$t_T$ étant l'instant d'occurrence du second événement caractéristique de la même courbe en forme de S (62) du signal d'erreur focale (FES) ;
$\Delta F$ étant la distance spatiale axiale entre deux caractéristiques physiques dudit faisceau de lumière (32) associées respectivement auxdits, premier et second, évènements caractéristiques.
et $\Delta t_C = t_{CR} - t_{CS}$ étant l'intervalle de temps entre lesdits évènements caractéristiques desdites courbes du signal de données (72 ; 73).

**22.** Procédé selon la revendication 21, dans lequel :

ledit premier événement caractéristique de ladite courbe en forme de S (62) est une valeur maximale de cette courbe en forme de S (62) ;
ledit second événement caractéristique de la même courbe en forme de S (62) est une valeur minimale de la même courbe en forme de S (62) ;
$\Delta F$ étant la distance focale astigmatique dudit faisceau de lumière (32).
et chacun desdits évènements caractéristiques desdites courbes du signal de données (72 ; 73) étant le pic de la courbe correspondante (72 ; 73) de la partie basse fréquence du signal de données.

**23.** Procédé pour reconnaître le type (CD ; DVD) d'un disque optique, dans lequel :

un faisceau de lumière (32) est généré, dirigé vers le disque optique (2), et conduit à être réfléchi par le disque optique (2), où le faisceau de lumière passe par une lentille optique (34) ;
le faisceau de lumière réfléchi (32d) est reçu par un détecteur optique (35);
un signal de sortie ($S_R$) dudit détecteur optique (35) est traité pour en dériver un signal d'erreur focale (FES) ;
ladite lentille optique (34) est amenée à se déplacer suivant l'axe par rapport au disque optique (2) ;

**caractérisé en ce que** :

ledit faisceau de lumière a de l'astigmatisme, c'est-à-dire , le spot focal tangentiel (112) et le spot focal sagittal (122) en des positions mutuellement différentes ;
l'occurrence d'évènements caractéristiques des courbes du signal de données (72 ; 73), associées avec deux couches, est chronométré ;
au moins une courbe en forme de S (62) du signal d'erreur focale (FES) est chronométrée ;

dans lequel un paramètre de type de disque ($\alpha$) est calculé selon la formule :

$$\alpha = \Delta t_C \, / \, (t_T - t_S)$$

$t_S$ étant l'instant d'occurrence du premier événement caractéristique d'au moins une dite courbe en forme de S (62) du signal d'erreur focale (FES) ;

$t_T$ étant l'instant d'occurrence du second événement caractéristique de la même courbe en forme de S (62) du signal d'erreur focale (FES) ;

$\Delta t_C = t_{CR}-t_{CS}$ étant l'intervalle de temps entre lesdits évènements caractéristiques desdites courbes du signal de données (72 ; 73).

où la valeur mesurée du paramètre ($\alpha$) est comparée avec une référence prédéterminée ($\alpha_{REF}$), et où il est décidé que le disque optique est d'un premier type (CD) si la valeur mesurée du paramètre est plus grande que ladite valeur de référence ($\alpha_{REF}$), et que le disque optique est d'un second type (DVD) si la valeur mesurée du paramètre est plus petite que ladite référence ($\alpha_{REF}$).

24. Procédé selon la revendication 23, dans lequel :

ledit premier événement caractéristique est une valeur maximale de la courbe en forme de S (62) du signal d'erreur focale (FES) ;

ledit second événement caractéristique est une valeur minimale de la même courbe en forme de S (62) du signal d'erreur focale (FES) ;

et chacun desdits évènements caractéristiques desdites courbes du signal de données (72 ; 73) étant le pic de la courbe correspondante (72 ; 73) de la partie basse fréquence du signal de données.

25. Procédé pour reconnaître le type (CD ; DVD) d'un disque optique, dans lequel la distance (D) entre deux couches réfléchissantes d'un disque optique (2) est mesurée par un procédé selon l'une quelconque des revendications 7-13, 16-22 ;

dans lequel la distance mesurée est comparée à une valeur de référence prédéterminée ;

et dans lequel il est décidé que le disque optique est d'un premier type (CD) si la distance mesurée (D) est plus grande qu'une dite valeur de référence, et que le disque optique est du second type (DVD) si le distance mesurée (D) est plus petite que ladite valeur de référence.

26. Procédé selon la revendication 25, dans lequel ladite distance (D) correspond à l'épaisseur du disque, et où ladite valeur de référence prédéterminée est de préférence de l'ordre d'environ 0,9 mm.

27. Procédé selon la revendication 7 ou 16, dans lequel ladite distance (D) correspond à l'épaisseur du disque.

28. Appareil lecteur de disque (1), approprié pour stocker des informations sur ou lire des informations à partir d'un disque de stockage optique (2), l'appareil comprenant :

des moyens générateurs de faisceau de lumière (31) agencés pour générer un faisceau de lumière (32) ;

une lentille optique (34) pour diriger le faisceau de lumière vers le disque optique, la lentille d'objectif étant agencée pour pouvoir se déplacer suivant l'axe ;

un actionneur focal (52) agencé pour déplacer la lentille d'objectif suivant l'axe ;

un détecteur optique (35) agencé pour recevoir le faisceau réfléchi de lumière (32d), réfléchi par le disque optique (2) ;

un circuit de commande (90) ayant une sortie (94) couplée à une entrée de commande de l'actionneur focal, et ayant une entrée de signal de lecture (91) pour recevoir un signal de sortie ($S_R$) dudit détecteur optique (35) ;

dans lequel le circuit de commande (90) est conçu pour générer comme son signal de sortie (94) un signal de commande ($S_{CF}$) pour commander l'actionneur focal ;

dans lequel le circuit de commande (90) est conçu pour générer son signal de commande ($S_{CF}$) de manière à causer le déplacement de ladite lentille optique (34) suivant l'axe par rapport audit disque optique (2) ;

dans lequel le circuit de commande (90) est conçu pour traiter le signal de sortie ($S_R$) dudit détecteur optique (35) pour en dériver un signal d'erreur focale (FES) ;

**caractérisé en ce que** :

ledit faisceau de lumière a de l'astigmatisme, c'est-à-dire un spot focal tangentiel (112) et un spot focal sagittal (122) en des positions axiales mutuellement différentes ;

où le circuit de commande (90) est conçu pour chronométrer une courbe en forme de S (62) du signal d'erreur focale (FES) ;

et où le circuit de commande (90) est conçu pour exécuter un procédé selon l'une quelconque des revendications précédentes.

**29.** Appareil lecteur de disque (1), approprié pour stocker des informations sur ou lire des informations à partir d'un disque de stockage optique (2), l'appareil comprenant :

des moyens générateurs de faisceau de lumière (31) agencés pour générer un faisceau de lumière (32) ;
une lentille optique (34) pour diriger le faisceau de lumière vers le disque optique, la lentille d'objectif étant agencée pour pouvoir se déplacer suivant l'axe ;
un actionneur focal (52) agencé pour déplacer la lentille d'objectif suivant l'axe ;
un détecteur optique (35) agencé pour recevoir le faisceau réfléchi de lumière (32d), réfléchi par le disque optique (2) ;
un circuit de commande (90) ayant une sortie (94) couplée à une entrée de commande de l'actionneur focal, et ayant une entrée de signal de lecture (91) pour recevoir un signal de sortie ($S_R$) dudit détecteur optique (35) ;

dans lequel le circuit de commande (90) est conçu pour générer comme son signal de sortie (94) un signal de commande ($S_{CF}$) pour commander l'actionneur focal;
dans lequel le circuit de commande (90) est conçu pour générer son signal de commande ($S_{CF}$) de manière à causer le déplacement de ladite lentille optique (34) suivant l'axe par rapport audit disque optique (2) ;
dans lequel le circuit de commande (90) est conçu pour traiter le signal de sortie ($S_R$) dudit détecteur optique (35) pour en dériver un signal d'erreur focale (FES) ;
**caractérisé en ce que** :

ledit faisceau de lumière a de l'astigmatisme, c'est-à-dire un spot focal tangentiel (112) et un spot focal sagittal (122) en des positions axiales mutuellement différentes ;

où le circuit de commande (90) est conçu pour chronométrer une courbe en forme de S (62) du signal d'erreur focale (FES) ;
et où le circuit de commande (90) est conçu pour exécuter un procédé de reconnaissance de type de disque selon l'une quelconque des revendications précédentes 14, 15, 23-26.
dans lequel l'appareil lecteur de disque (1) est adapté pour traiter seulement un seul type de disque, et où l'appareil lecteur de disque (1) rejette un disque inséré si la procédure de reconnaissance de type de disque révèle que le disque inséré n'est pas un disque correct.

**30.** Appareil lecteur de disque (1), approprié pour stocker des informations sur ou lire des informations à partir d'un disque de stockage optique (2), l'appareil comprenant :

des moyens générateurs de faisceau de lumière (31) agencés pour générer un faisceau de lumière (32) ;
une lentille optique (34) pour diriger le faisceau de lumière vers le disque optique, la lentille d'objectif étant agencée pour pouvoir se déplacer suivant l'axe ;
un actionneur focal (52) agencé pour déplacer la lentille d'objectif suivant l'axe ;
un détecteur optique (35) agencé pour recevoir le faisceau réfléchi de lumière (32d), réfléchi par le disque optique (2) ;
un circuit de commande (90) ayant une sortie (94) couplée à une entrée de commande de l'actionneur focal, et ayant une entrée de signal de lecture (91) pour recevoir un signal de sortie ($S_R$) dudit détecteur optique (35) ;

dans lequel le circuit de commande (90) est conçu pour générer comme son signal de sortie (94) un signal de commande ($S_{CF}$) pour commander l'actionneur focal;
dans lequel le circuit de commande (90) est conçu pour générer son signal de commande ($S_{CF}$) de manière à causer le déplacement de ladite lentille optique (34) suivant l'axe par rapport audit disque optique (2) ;
dans lequel le circuit de commande (90) est conçu pour traiter le signal de sortie ($S_R$) dudit détecteur optique (35) pour en dériver un signal d'erreur focale (FES) ;
**caractérisé en ce que** :

ledit faisceau de lumière a de l'astigmatisme, c'est-à-dire un spot focal tangentiel (112) et un spot focal sagittal (122) en des positions axiales mutuellement différentes ;

où le circuit de commande (90) est conçu pour chronométrer une courbe en forme de S (62) du signal d'erreur focale (FES) ;

et où le circuit de commande (90) est conçu pour exécuter un procédé de reconnaissance de type de disque selon l'une quelconque des revendications précédentes 14, 15, 23-26.

dans lequel l'appareil lecteur de disque (1) est adapté pour traiter au moins deux types différents de disque, et où l'appareil lecteur de disque (1) entreprend de traiter un disque inséré selon le type de disque révélé par la procédure de reconnaissance de type de disque.

FIG.1

FIG.2

FIG.3

FIG.4A

FIG.4B   FIG.4C   FIG.4D

FIG.5